# EUROPEAN PATENT APPLICATION

(11) **EP 4 827 222 A1**
(43) Date of publication of application: **21.10.2026**
(21) Application number: 24915181.2
(22) Date of filing: 26.12.2024
(51) Int. Cl.: H04W 74/00

(54) **COMMUNICATION METHOD AND APPARATUS**

(30) Priority: 04.01.2024 CN 202410029073
(71) Applicant: Huawei Technologies Co., Ltd., Shenzhen, Guangdong 518129 (CN)
(72) Inventor: XIE, Xi, Shenzhen, Guangdong 518129 (CN); SHI, Meng, Shenzhen, Guangdong 518129 (CN); PENG, Bingguang, Shenzhen, Guangdong 518129 (CN); CHANG, Junren, Shenzhen, Guangdong 518129 (CN)
(74) Representative: Pfenning, Meinig & Partner mbB
(86) International application number: PCT/CN2024/142903
(87) International publication number: WO 2025/145966

(57) **Abstract**

A communication method and apparatus relating to the field of communication technologies are provided, so that a terminal device performs uplink sending to ensure that a network device implements uplink receiving, thereby ensuring communication reliability and improving communication performance. The method includes: The terminal device sends first indication information; and sends first information. The first indication information indicates a capability of the terminal device to avoid a second resource when sending the first information on a first resource, and the second resource being a resource, in the first resource, that overlaps a third resource.

## Description

This application claims priority to Chinese Patent Application No. 202410029073.7, filed with the China National Intellectual Property Administration on January 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a network device may indicate one or more physical uplink shared channel (physical uplink shared channel, PUSCH) resources to a terminal device, and the network device may receive one or more pieces of uplink information from the terminal device on the one or more PUSCH resources.

However, the one or more PUSCH resources may overlap another resource, for example, overlap a random access resource. Consequently, the network device may simultaneously receive uplink information of one terminal device and a random access message of another terminal device on the overlapping resource. If the network device does not have a parallel receiving capability, receiving fails, which affects communication performance.

Therefore, how to ensure communication reliability and improve communication performance becomes an urgent technical problem to be resolved.

### SUMMARY

Embodiments of this application provide a communication method and apparatus, to ensure that a network device implements uplink receiving, thereby ensuring communication reliability and improving communication performance.

According to a first aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or a part of functions of the terminal device. The method includes: The terminal device sends first indication information; and sends first information. The first indication information indicates a capability of the terminal device to avoid a second resource when sending the first information on a first resource, and the second resource being a resource, in the first resource, that overlaps a third resource.

Based on this solution, the terminal device sends the first indication information to a network device, so that the network device can determine whether the terminal device supports avoiding the second resource when sending the first information on the first resource, and the network device can coordinate, with the terminal device based on the first indication information, a resource for transmitting the first information. This can prevent, as much as possible, the network device from receiving the first information and other information (the other information is information transmitted on the third resource) on an overlapping resource, thereby ensuring communication reliability and improving communication performance.

In a possible implementation, the terminal device receives second indication information. The second indication information indicates that the terminal device is allowed to send the first indication information.

Based on this possible implementation, the terminal device may determine, based on the second indication information, that the network device can parse the first indication information. This can avoid, as much as possible, a case in which the terminal device sends the first indication information to the network device but the network device does not parse the first indication information, and ensure that the first indication information sent by the terminal device can be parsed by the network device. This can avoid, as much as possible, a communication failure caused by misalignment between the network device and the terminal device, and improve efficiency of information exchange between the network device and the terminal device.

In a possible implementation, when the first indication information indicates that the terminal device supports avoiding the second resource when sending the first information on the first resource, the terminal device sends the first information only on a resource in the first resource other than the second resource.

Based on this possible implementation, the terminal device may directly send the first information on the resource in the first resource other than the second resource, and the network device does not need to additionally indicate other information. This can reduce transmission overheads. In addition, it can be ensured, as much as possible, that the network device is not interfered with by other information (the other information is information transmitted on the third resource) when receiving the first information, thereby improving communication reliability and improving communication performance.

In a possible implementation, when the first indication information indicates that the terminal device supports avoiding the second resource when sending the first information on the first resource, the terminal device receives third indication information, and sends the first information only on a resource in the first resource other than the second resource, where the third indication information indicates that the terminal device is to avoid the second resource when sending the first information on the first resource; or the terminal device receives third indication information, and sends the first information on the first resource, where the third indication information indicates that the terminal device is not to avoid the second resource when sending the first information on the first resource.

Based on this possible implementation, the network device may indicate, based on an actual communication status, a resource for sending the first information by the terminal device, thereby improving flexibility of determining the resource for sending the first information. The third indication information may indicate the terminal device to avoid the second resource when sending the first information, and the terminal device may send the first information on the resource in the first resource other than the second resource, to ensure, as much as possible, that the network device is not interfered with by other information (the other information is information transmitted on the third resource) when receiving the first information, thereby improving communication reliability and improving communication performance. Alternatively, the third indication information may indicate the terminal device not to avoid the second resource when sending the first information, so that operation complexity of sending the first information by the terminal device can be reduced to improve operating efficiency of the terminal device, which is more friendly to an implementation of the terminal device.

In a possible implementation, when the first indication information indicates that the terminal device does not support avoiding the second resource when sending the first information on the first resource, the terminal device receives fourth indication information, and sends the first information on a fourth resource. The fourth indication information indicates the fourth resource, and the fourth resource is a resource that does not overlap the third resource.

Based on this possible implementation, the terminal device may send the first information on the fourth resource, to ensure, as much as possible, that the network device is not interfered with by other information (the other information is information transmitted on the third resource) when receiving the first information on the fourth resource, thereby improving communication reliability and improving communication performance.

In a possible implementation, when the first indication information indicates that the terminal device supports avoiding the second resource when sending the first information on the first resource, the terminal device sends the first information on the first resource when the terminal device does not receive the third indication information; or the terminal device sends the first information only on a resource in the first resource other than the second resource. The third indication information indicates, to the terminal device, whether to avoid the second resource when sending the first information on the first resource.

Based on this possible implementation, when the terminal device does not determine whether the network device parses the first indication information, and the terminal device cannot receive the third indication information, the terminal device may send the first information on the first resource, so that the terminal device is aligned with the network device. In other words, the network device may receive the first information on the first resource. This ensures normal communication between the network device and the terminal device. Alternatively, the terminal device may determine that the network device parses the first indication information, and the terminal device may directly send the first information on the resource in the first resource other than the second resource. This can ensure, as much as possible, that the network device is not interfered with by other information when receiving the first information, thereby improving communication reliability and improving communication performance.

According to a second aspect, a communication method is provided. The method may be performed by a network device. Unless otherwise specified, the "network device" in this application may be the network device, or may be a component (for example, a processor, a chip, or a chip system) in the network device, or may be a logical module or software (for example, a central unit (central unit, CU), a distributed unit (distributed unit, DU), or a radio unit (radio unit, RU)) that can implement all or a part of functions of the network device. The method includes: The network device receives first indication information; and receives first information. The first indication information indicates a capability of a terminal device to avoid a second resource when sending the first information on a first resource, and the second resource being a resource, in the first resource, that overlaps a third resource.

Based on this solution, the network device receives the first indication information from the terminal device, the network device may determine whether the terminal device supports avoiding the second resource when sending the first information on the first resource, the network device may coordinate, with the terminal device based on the first indication information, a resource for transmitting the first information, and the network device may be prevented, as much as possible, from receiving the first information and other information (the other information is information transmitted on the third resource) on an overlapping resource, thereby improving communication reliability and improving communication performance.

In a possible implementation, the network device sends second indication information. The second indication indicates that the terminal device is allowed to send the first indication information.

Based on this possible implementation, the network device sends the second indication information to the terminal device, so that the terminal device can determine, based on the second indication information, that the network device can parse the first indication information. This can avoid, as much as possible, a case in which the terminal device sends the first indication information to the network device but the network device does not parse the first indication information, and ensure that the first indication information sent by the terminal device can be parsed by the network device. This can avoid, as much as possible, a communication failure caused by misalignment between the network device and the terminal device, and improve efficiency of information exchange between the network device and the terminal device.

In a possible implementation, when the first indication information indicates that the terminal device supports avoiding the second resource when sending the first information on the first resource, the network device receives the first information only on a resource in the first resource other than the second resource.

Based on this possible implementation, the network device may consider, by default, that the terminal device sends the first information on the resource in the first resource other than the second resource, and the network device no longer additionally indicates other information. This can reduce transmission overheads. In addition, it can be ensured, as much as possible, that the network device is not interfered with by other information (the other information is information transmitted on the third resource) when receiving the first information, thereby improving communication reliability and improving communication performance.

In a possible implementation, when the first indication information indicates that the terminal device supports avoiding the second resource when sending the first information on the first resource, the network device sends third indication information, and receives the first information only on a resource in the first resource other than the second resource, where the third indication information indicates that the terminal device is to avoid the second resource when sending the first information on the first resource; or the network device sends third indication information, and receives the first information on the first resource, where the third indication information indicates that the terminal device is not to avoid the second resource when sending the first information on the first resource.

Based on this possible implementation, the network device may indicate, based on an actual communication status, a resource for sending the first information by the terminal device, thereby improving flexibility of determining the resource for sending the first information. The third indication information may indicate the terminal device to avoid the second resource when sending the first information, and the terminal device may send the first information on the resource in the first resource other than the second resource, to ensure, as much as possible, that the network device is not interfered with by other information (the other information is information transmitted on the third resource) when receiving the first information, thereby improving communication reliability and improving communication performance. Alternatively, the third indication information may indicate the terminal device not to avoid the second resource when sending the first information, so that operation complexity of sending the first information by the terminal device can be reduced to improve operating efficiency of the terminal device, which is more friendly to an implementation of the terminal device.

In a possible implementation, when the first indication information indicates that the terminal device does not support avoiding the second resource when sending the first information on the first resource, the network device sends fourth indication information; and receives the first information on a fourth resource. The fourth indication information indicates the fourth resource, and the fourth resource is a resource that does not overlap the third resource.

Based on this possible implementation, it can be ensured, as much as possible, that the network device is not interfered with by other information (the other information is information transmitted on the third resource) when receiving the first information on the fourth resource, thereby improving communication reliability and improving communication performance.

In a possible implementation, when the first indication information indicates that the terminal device supports avoiding the second resource when sending the first information on the first resource, the network device receives the first information on the first resource when the network device does not parse the first indication information; or the network device receives the first information only on a resource in the first resource other than the second resource when the network device parses the first indication information.

Based on this possible implementation, it is possible that the network device does not parse the first indication information. When the network device does not parse the third indication information, the network device does not determine whether the terminal device supports avoiding the second resource when sending the first information on the first resource, and the network device may receive the first information on the first resource. In addition, the terminal device does not receive the third indication information, and may send the first information on the first resource, so that the terminal device can be aligned with the network device, thereby ensuring normal communication between the network device and the terminal device. Alternatively, it is impossible that the network device does not parse the first indication information. The network device may not send the third indication information to the terminal device, and the network device may directly receive the first information on the resource in the first resource other than the second resource. This can ensure, as much as possible, that the network device is not interfered with by other information when receiving the first information, thereby improving communication reliability and improving communication performance.

With reference to the first aspect and the second aspect, in a possible implementation, the first indication information is located in a first message, and the first message is one or more of the following: a random access message 3 and a random access message B.

With reference to the first aspect and the second aspect, in a possible implementation, the first indication information is carried in a subheader of a media access control (media access control, MAC) protocol data unit (protocol data unit, PDU) in the first message.

Based on this possible implementation, the first indication information may be located in the foregoing two possible messages, and a location of the first indication information in the first message may be more specifically determined. This provides a feasible solution for implementing the first indication information.

With reference to the first aspect and the second aspect, in a possible implementation, the first indication information is indicated by one or more of the following fields in the subheader of the media access control protocol data unit: a logical channel identifier (logical channel identifier, LCID) field and a first field.

Based on this possible implementation, the first indication information may be indicated by the LCID field, or may be indicated by the first field, or may be indicated by the LCID field and the first field. This provides three feasible solutions for implementing the first indication information.

With reference to the first aspect and the second aspect, in a possible implementation, the first indication information is indicated by a value of the LCID field in logical channel identifier space, and the logical channel identifier space is indicated by the first field; or the first indication information is indicated by an extended LCID field, and the extended LCID field includes the LCID field and the first field.

Based on this possible implementation, when the first indication information is jointly indicated by the LCID field and the first field, this may be specifically implemented in the foregoing two methods.

With reference to the first aspect and the second aspect, in a possible implementation, the first indication information further indicates a size (size) of common control channel (common control channel, CCCH) information; or fifth indication information is carried in the first message, the fifth indication information indicates a size of CCCH information, and the first message is one or more of the following: the random access message 3 and the random access message B.

Based on this possible implementation, the network device may parse the CCCH information based on the size of the CCCH information. In this application, the first indication information may further indicate the size of the CCCH information, and no additional information may need to indicate the size of the CCCH information, thereby reducing signaling overheads. Alternatively, the terminal device may indicate the size of the CCCH information based on the fifth indication information, and the terminal device may dynamically separately indicate, based on an actual communication status, the capability of the terminal device to avoid the second resource when sending the first information on the first resource and/or the size of the CCCH information. This can improve flexibility of indicating, by the terminal device, the capability of the terminal device to avoid the second resource when sending the first information on the first resource and the size of the CCCH information.

With reference to the first aspect and the second aspect, in a possible implementation, the first indication information is further used to request uplink transmission enhancement; or first request information is carried in the first message, the first request information is used to request uplink transmission enhancement, and the first message is one or more of the following: the random access message 3 and the random access message B.

Based on this possible implementation, the network device may indicate, to the terminal device based on a request of the terminal device for uplink transmission enhancement, a plurality of uplink resources used to transmit the first information, which may reduce a transmission delay compared with scheduling the uplink resource a plurality of times to transmit the first information. In this application, the first indication information may further request uplink transmission enhancement, and no additional information may need to be used to request uplink transmission enhancement, thereby reducing signaling overheads. Alternatively, the terminal device may request uplink transmission enhancement based on the first request information, and the terminal device may dynamically separately indicate, based on an actual communication status, the capability of the terminal device to avoid the second resource when sending the first information on the first resource and/or the request for uplink transmission enhancement. This can improve flexibility of indicating, by the terminal device, the capability of the terminal device to avoid the second resource when sending the first information on the first resource and the request for uplink transmission enhancement.

According to a third aspect, a communication method is provided. The method may be performed by a terminal device. Unless otherwise specified, the "terminal device" in this application may be the terminal device, or may be a component (for example, a processor, a chip, or a chip system) in the terminal device, or may be a logical module or software that can implement all or a part of functions of the terminal device. The method includes: The terminal device receives configuration information of a first random access resource; and indicates, by using the first random access resource, a capability of the terminal device to avoid a second resource when sending first information on a first resource, where the second resource being a resource, in the first resource, that overlaps a third resource.

Based on this solution, in comparison with a case in which the terminal device explicitly indicates, based on the first indication information, the capability of the terminal device to avoid the second resource when sending the first information on the first resource, the terminal device may implicitly indicate, based on the first random access resource, that the terminal device can avoid the second resource when sending the first information on the first resource. In this way, a network device and the terminal device can coordinate a resource for transmitting the first information, to prevent, as much as possible, the network device from receiving the first information and other information (the other information is information transmitted on the third resource) on an overlapping resource, thereby ensuring communication reliability and improving communication performance.

In a possible implementation, random access is initiated on the first random access resource when the terminal device supports avoiding the second resource when sending the first information on the first resource.

Based on this possible implementation, the terminal device may implicitly indicate, by initiating random access on the first random access resource, that the terminal device can avoid the second resource when sending the first information on the first resource. This provides a feasible solution for indicating, by the terminal device, the capability of the terminal device to avoid the second resource when sending the first information on the first resource.

In a possible implementation, the terminal device sends the first information to a network device on a resource in the first resource other than the second resource; or receives third indication information from a network device, and sends the first information to the network device on a resource in the first resource other than the second resource; or receives third indication information from a network device, and sends the first information to the network device on the first resource. The third indication information indicates that the terminal device is to avoid the third resource when sending the first information, or the third indication information indicates that the terminal device is not to avoid the third resource when sending the first information.

Based on this possible implementation, the terminal device may directly send the first information on the resource in the first resource other than the second resource, and the network device does not need to additionally indicate other information. This can reduce transmission overheads. In addition, it can be ensured, as much as possible, that the network device is not interfered with by other information (the other information is information transmitted on the third resource) when receiving the first information, thereby improving communication reliability and improving communication performance. Alternatively, the network device may indicate, based on an actual communication status, a resource for sending the first information by the terminal device, thereby improving flexibility of determining the resource for sending the first information. The third indication information may indicate the terminal device to avoid the second resource when sending the first information, and the terminal device may send the first information on the resource in the first resource other than the second resource, to ensure, as much as possible, that the network device is not interfered with by other information when receiving the first information, thereby improving communication reliability and improving communication performance. Alternatively, the third indication information may indicate the terminal device not to avoid the second resource when sending the first information, so that operation complexity of sending the first information by the terminal device can be reduced to improve operating efficiency of the terminal device, which is more friendly to an implementation of the terminal device.

In a possible implementation, the first random access resource further indicates the terminal device to request uplink transmission enhancement; or the terminal device sends first request information, where the first request information is used to request uplink transmission enhancement.

Based on this possible implementation, the network device may indicate, to the terminal device based on a request of the terminal device for uplink transmission enhancement, a plurality of uplink resources used to transmit the first information, which may reduce a transmission delay compared with scheduling the uplink resource a plurality of times to transmit the first information. In this application, the terminal device may implicitly indicate, by initiating random access on the first random access resource, that the terminal device requests uplink transmission enhancement, and no additional information may need to be used to request uplink transmission enhancement, thereby reducing signaling overheads. Alternatively, the terminal device may request uplink transmission enhancement based on the first request information, and the terminal device may dynamically separately indicate, based on an actual communication status, the capability of the terminal device to avoid the second resource when sending the first information on the first resource and/or the request for uplink transmission enhancement. This can improve flexibility of indicating, by the terminal device, the capability of the terminal device to avoid the second resource when sending the first information on the first resource and the request for uplink transmission enhancement.

According to a fourth aspect, a communication method is provided. The method may be performed by a network device. Unless otherwise specified, the "network device" in this application may be the network device, or may be a component (for example, a processor, a chip, or a chip system) in the network device, or may be a logical module or software (for example, a CU, a DU, or an RU) that can implement all or a part of functions of the network device. The method includes: The network device sends configuration information of a first random access resource; and determines, by using the first random access resource, a capability of a terminal device to avoid a second resource when sending first information on a first resource, where the second resource being a resource, in the first resource, that overlaps a third resource.

Based on this solution, in comparison with a case in which the network device explicitly determines, based on the first indication information, the capability of the terminal device to avoid the second resource when sending the first information on the first resource, the network device may implicitly determine, by receiving a random access message on the first random access resource, the capability of the terminal device to avoid the second resource when sending the first information on the first resource. In this way, the network device can coordinate, with the terminal device, a resource for transmitting the first information, and the network device may be prevented, as much as possible, from receiving the first information and other information (the other information is information transmitted on the third resource) on an overlapping resource, thereby ensuring communication reliability and improving communication performance.

In a possible implementation, a random access message is received on the first random access resource.

Based on this possible implementation, the network device may implicitly determine, by receiving the random access message on the first random access resource, that the terminal device can avoid the second resource when sending the first information on the first resource. This provides a feasible solution for determining that the terminal device avoids the second resource when sending the first information on the first resource.

In a possible implementation, the network device receives the first information from the terminal device only on a resource in the first resource other than the second resource; or sends third indication information to the terminal device, and receives the first information from the terminal device only on a resource in the first resource other than the second resource, where the third indication information indicates that the terminal device is to avoid the third resource when sending the first information; or sends third indication information to the terminal device, and receives the first information from the terminal device on the first resource, where the third indication information indicates that the terminal device is not to avoid the third resource when sending the first information.

Based on this possible implementation, the network device may directly receive the first information on the resource in the first resource other than the second resource, and the network device does not need to additionally indicate other information. This can reduce transmission overheads. In addition, it can be ensured, as much as possible, that the network device is not interfered with by other information (the other information is information transmitted on the third resource) when receiving the first information, thereby improving communication reliability and improving communication performance. Alternatively, the network device may indicate, based on an actual communication status, a resource for sending the first information by the terminal device, thereby improving flexibility of determining the resource for sending the first information. The third indication information may indicate the terminal device to avoid the second resource when sending the first information, and the terminal device may send the first information on the resource in the first resource other than the second resource, to ensure, as much as possible, that the network device is not interfered with by other information when receiving the first information, thereby improving communication reliability and improving communication performance. Alternatively, the third indication information may indicate the terminal device not to avoid the second resource when sending the first information, so that operation complexity of sending the first information by the terminal device can be reduced to improve operating efficiency of the terminal device, which is more friendly to an implementation of the terminal device.

With reference to the third aspect and the fourth aspect, in a possible implementation, the first random access resource includes one or more of the following: a specific random access preamble or a specific random access channel occasion.

Based on this possible implementation, a plurality of feasible solutions are provided for implementing the first random access resource.

With reference to the first aspect, the second aspect, the third aspect, and the fourth aspect, in a possible implementation, the third resource is a random access resource.

Based on the possible implementation, a feasible solution is provided for implementing the third resource.

According to a fifth aspect, a communication apparatus is provided, and is configured to implement the method according to the first aspect. The communication apparatus may be the terminal device in the first aspect, or an apparatus or a component, for example, a chip, included in the terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the first aspect and the possible implementations of the first aspect. The processing module may be configured to implement a processing function in any one of the first aspect and the possible implementations of the first aspect. For example, the transceiver module is configured to send first indication information. The first indication information indicates a capability of the terminal device to avoid a second resource when sending first information on a first resource, and the second resource being a resource, in the first resource, that overlaps a third resource. The transceiver module is further configured to send the first information.

Optionally, the transceiver module and the processing module of the communication apparatus in the fifth aspect may further perform corresponding functions in any one of the first aspect or the possible implementations of the first aspect. For details, refer to the detailed descriptions in the method examples. For beneficial effects that can be achieved, refer to the foregoing related content.

According to a sixth aspect, a communication apparatus is provided, and is configured to implement the method according to the second aspect. The communication apparatus may be the network device in the second aspect, or an apparatus or a component, for example, a chip, included in the network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the second aspect and the possible implementations of the second aspect. The processing module may be configured to implement a processing function in any one of the second aspect and the possible implementations of the second aspect. The transceiver module is configured to receive first indication information. The first indication information indicates a capability of a terminal device to avoid a second resource when sending first information on a first resource, and the second resource being a resource, in the first resource, that overlaps a third resource. The transceiver module is further configured to receive the first information.

Optionally, the transceiver module and the processing module of the communication apparatus in the sixth aspect may further perform corresponding functions in any one of the second aspect or the possible implementations of the second aspect. For details, refer to the detailed descriptions in the method examples. For beneficial effects that can be achieved, refer to the foregoing related content.

According to a seventh aspect, a communication apparatus is provided, and is configured to implement the method according to the third aspect. The communication apparatus may be the terminal device in the third aspect, or an apparatus or a component, for example, a chip, included in the terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the third aspect and the possible implementations of the third aspect. The processing module may be configured to implement a processing function in any one of the third aspect and the possible implementations of the third aspect. For example, the transceiver module is configured to receive configuration information of a first random access resource; and the processing module is configured to indicate, by using the first random access resource, a capability of the terminal device to avoid a second resource when sending first information on a first resource. The second resource being a resource, in the first resource, that overlaps a third resource.

Optionally, the transceiver module and the processing module of the communication apparatus in the seventh aspect may further perform corresponding functions in any one of the third aspect or the possible implementations of the third aspect. For details, refer to the detailed descriptions in the method examples. For beneficial effects that can be achieved, refer to the foregoing related content.

According to an eighth aspect, a communication apparatus is provided, and is configured to implement the method according to the fourth aspect. The communication apparatus may be the network device in the fourth aspect, or an apparatus or a component, for example, a chip, included in the network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the fourth aspect and the possible implementations of the fourth aspect. The processing module may be configured to implement a processing function in any one of the fourth aspect and the possible implementations of the fourth aspect. For example, the transceiver module is configured to send configuration information of a first random access resource; and the processing module is configured to determine, by using the first random access resource, a capability of a terminal device to avoid a second resource when sending first information on a first resource. The second resource being a resource, in the first resource, that overlaps a third resource.

Optionally, the transceiver module and the processing module of the communication apparatus in the eighth aspect may further perform corresponding functions in any one of the fourth aspect or the possible implementations of the fourth aspect. For details, refer to the detailed descriptions in the method examples. For beneficial effects that can be achieved, refer to the foregoing related content.

According to a ninth aspect, a communication apparatus is provided, including at least one processor. The processor is configured to cause, by executing computer instructions or by using a logical circuit, the communication apparatus to perform the method according to any one of the foregoing aspects or the possible implementations of any one of the foregoing aspects. The communication apparatus may be the terminal device in any one of the first aspect or the possible implementations of the first aspect, or an apparatus or a component, for example, a chip, included in the terminal device; or the communication apparatus may be the network device in any one of the second aspect or the possible implementations of the second aspect, or an apparatus or a component, for example, a chip, included in the network device; or the communication apparatus may be the terminal device in any one of the third aspect or the possible implementations of the third aspect, or an apparatus or a component, for example, a chip, included in the terminal device; or the communication apparatus may be the network device in any one of the fourth aspect or the possible implementations of the fourth aspect, or an apparatus or a component, for example, a chip, included in the network device.

In some possible implementations, the communication apparatus further includes a memory, configured to store computer instructions and/or a configuration file of the logic circuit. Optionally, the memory and the processor are integrated together, or the memory is independent of the processor.

According to a tenth aspect, a communication apparatus is provided, including a processor and a communication interface. The communication interface is configured to input and/or output a signal. The processor is configured to execute a computer program or instructions, to enable the communication apparatus to perform the method in any one of the foregoing aspects. The communication apparatus may be the terminal device in any one of the first aspect or the possible implementations of the first aspect, or an apparatus or a component, for example, a chip, included in the terminal device; or the communication apparatus may be the network device in any one of the second aspect or the possible implementations of the second aspect, or an apparatus or a component, for example, a chip, included in the network device; or the communication apparatus may be the terminal device in any one of the third aspect or the possible implementations of the third aspect, or an apparatus or a component, for example, a chip, included in the terminal device; or the communication apparatus may be the network device in any one of the fourth aspect or the possible implementations of the fourth aspect, or an apparatus or a component, for example, a chip, included in the network device.

In some possible implementations, the communication interface is an interface circuit, and is configured to read/write computer instructions. For example, the interface circuit is configured to: receive computer-executable instructions (the computer-executable instructions are stored in a memory, and may be directly read from the memory, or may be read via another component), and transmit the computer-executable instructions to the processor.

In some possible implementations, the communication interface is configured to communicate with a module outside the communication apparatus.

In some possible implementations, the communication apparatus may be a chip or a chip system. When the apparatus is the chip system, the chip system may include a chip, or may include a chip and another discrete component.

According to an eleventh aspect, a communication apparatus is provided, including a logic circuit and an interface circuit. The interface circuit is configured to input information and/or output information. The logic circuit is configured to: perform the method in any one of the foregoing aspects, and perform processing and/or generate to-be-output information based on the input information. The communication apparatus may be the terminal device in any one of the first aspect or the possible implementations of the first aspect, or an apparatus or a component, for example, a chip, included in the terminal device; or the communication apparatus may be the network device in any one of the second aspect or the possible implementations of the second aspect, or an apparatus or a component, for example, a chip, included in the network device; or the communication apparatus may be the terminal device in any one of the third aspect or the possible implementations of the third aspect, or an apparatus or a component, for example, a chip, included in the terminal device; or the communication apparatus may be the network device in any one of the fourth aspect or the possible implementations of the fourth aspect, or an apparatus or a component, for example, a chip, included in the network device.

According to a twelfth aspect, a computer-readable storage medium is provided. The computer-readable storage medium stores a computer program or instructions. When the computer program or the instructions are executed by a processor, the method in any one of the foregoing aspects is performed.

According to a thirteenth aspect, a computer program product is provided. When the computer program product is executed by a processor, the method according to any one of the foregoing aspects is performed.

It may be understood that when the communication apparatus provided in any one of the fifth aspect to the eleventh aspect is a chip, the foregoing sending action/function may be understood as outputting information, and the foregoing receiving action/function may be understood as inputting information.

For technical effects brought by any implementation of the fifth aspect to the thirteenth aspect, refer to the technical effects brought by any one of the first aspect or the possible implementations of the first aspect, or refer to the technical effects brought by any one of the second aspect or the possible implementations of the second aspect, or refer to the technical effects brought by any one of the third aspect or the possible implementations of the third aspect, or refer to the technical effects brought by any one of the fourth aspect or the possible implementations of the fourth aspect. Details are not described herein again.

According to a fourteenth aspect, a communication system is provided. The communication system includes the terminal device according to any one of the first aspect or the possible implementations of the first aspect and the network device according to any one of the second aspect or the possible implementations of the second aspect, or the communication system includes the terminal device according to any one of the third aspect or the possible implementations of the third aspect and the network device according to any one of the fourth aspect or the possible implementations of the fourth aspect.

### BRIEF DESCRIPTION OF DRAWINGS

FIG. 1 is an interaction diagram of random access according to an embodiment of this application;
FIG. 2 is an interaction diagram of random access according to an embodiment of this application;
FIG. 3 is an interaction diagram of random access according to an embodiment of this application;
FIG. 4 is an interaction diagram of random access according to an embodiment of this application;
FIG. 5 is a diagram of a structure of a communication system according to an embodiment of this application;
FIG. 6 is a diagram of a communication system according to an embodiment of this application;
FIG. 7a and FIG. 7b are diagrams of satellite scenarios according to an embodiment of this application;
FIG. 8 is a diagram of a satellite coverage area according to an embodiment of this application;
FIG. 9 is a diagram of a satellite coverage area according to an embodiment of this application;
FIG. 10 is a diagram of a structure of a communication apparatus according to an embodiment of this application;
FIG. 11 is an interaction diagram of a communication method according to an embodiment of this application;
FIG. 12 is a diagram of a subheader of a MAC PDU according to an embodiment of this application;
FIG. 13a to FIG. 13c are diagrams of first indication information according to an embodiment of this application;
FIG. 14 is an interaction diagram of a communication method according to an embodiment of this application;
FIG. 15 is an interaction diagram of a communication method according to an embodiment of this application;
FIG. 16 is an interaction diagram of a communication method according to an embodiment of this application;
FIG. 17 is an interaction diagram of a communication method according to an embodiment of this application;
FIG. 18 is a diagram of a structure of a terminal device according to an embodiment of this application;
FIG. 19 is a diagram of a structure of a network device according to an embodiment of this application; and
FIG. 20 is a diagram of a structure of another communication apparatus according to an embodiment of this application.

### DESCRIPTION OF EMBODIMENTS

The following describes implementations of embodiments of this application in detail with reference to accompanying drawings in this specification.

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, for same or similar parts of embodiments, mutual reference may be made between the embodiments, unless otherwise specified. In embodiments of this application, unless otherwise specified or there is a logic conflict, terms and/or descriptions between different embodiments are consistent and may be mutually referenced, and technical features in different embodiments may be combined into a new embodiment based on an internal logical relationship thereof. The following implementations of this application are not intended to limit the protection scope of this application.

For ease of understanding of the technical solutions in embodiments of this application, the following first briefly describes technologies related to this application.

### (1) Random access (random access, RA)

When a terminal device communicates with a network device, the terminal device may perform uplink/downlink synchronization with the network device. To be specific, the terminal device may implement downlink synchronization based on a reference signal sent by the network device; or the terminal device may perform random access to implement uplink synchronization.

Types of random access may include contention-based random access (contention-based RA, CBRA) and contention-free random access (contention-free RA, CFRA), and manners of random access may include four-step random access and two-step random access.

### (2) CBRA

In CBRA, a terminal device in a cell may select a random access resource from a shared random access resource (or a common random access resource) to initiate random access. Correspondingly, a network device may process this type of access request based on a contention resolution mechanism.

It may be understood that one terminal device may select a same random access resource as another terminal device. Therefore, a random access result is uncertain, and not all random access succeeds.

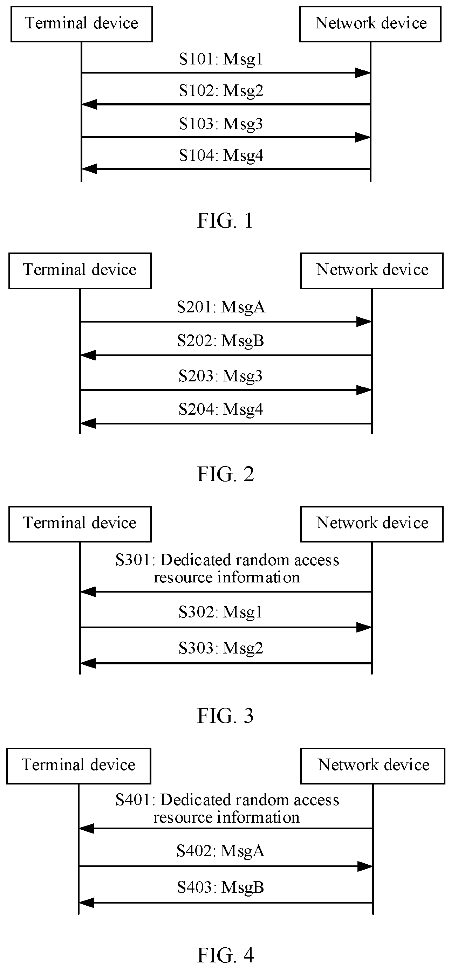

In a possible implementation, a specific procedure of CBRA in four-step random access may be shown in FIG. 1.

S101: A terminal device sends message1 (Message1, Msg1) to a network device, and correspondingly, the network device receives Msg1 from the terminal device.

Msg1 may also be referred to as a random access message 1. Msg1 includes a random access preamble (random access preamble).

It may be understood that the terminal device may select a random access resource, and send the random access preamble on a random access channel (RA channel, RACH) occasion (RACH occasion, RO).

It may be understood that, after sending the random access preamble, the terminal device may start an RA response window (RA response window) timer.

S102: The network device sends message2 (Message2, Msg2) to the terminal device, and correspondingly, the terminal device receives Msg2 from the network device.

Msg2 may also be referred to as a random access message 2. Msg2 includes a random access response (random access response, RAR).

The RAR may include a random access preamble identifier, timing advance (timing advance, TA) time adjustment information, uplink grant (uplink grant, UL grant) information, a temporary cell radio temporary identifier (temporary cell radio network temporary identifier, TC-RNIT), and the like.

It may be understood that, when the terminal device receives the RAR in a RA response window, and the random access preamble identifier in the RAR is consistent with an identifier of the random access preamble in S101, the response succeeds, and the terminal device may send message3 (Message3, Msg3) on an uplink resource; or when the terminal device does not receive the RAR in a RA response window, and/or the random access preamble identifier in the RAR is inconsistent with an identifier of the random access preamble in S101, the response fails, and the terminal device may perform S101 again.

S103: The terminal device sends Msg3 to the network device, and correspondingly, the network device receives Msg3 from the terminal device.

Msg3 may also be referred to as a random access message 3.

The terminal device may send Msg3 on the uplink resource. Msg3 includes uplink information.

The uplink information may be a radio resource control (radio resource control, RRC) setup request message (RRC setup request), an RRC resume request message (RRC resume request), or a beam failure recovery (beam failure recovery, BFR) MAC control element (control element, CE).

Optionally, the uplink information may further include identification information of the terminal device.

It may be understood that the uplink information may be transmitted on a MAC PDU.

The MAC PDU may include one or more MAC subPDUs (MAC subPDUs), one MAC subPDU may include one subheader, and one subheader may include one logical channel identifier (logical channel identifier, LCID) field (field) and one or more reserved bits.

The LCID field indicates or identifies information in the MAC subPDU.

It may be understood that, after sending Msg3, the terminal device may start or restart a RA contention resolution timer.

S104: The network device sends message4 (Message4, Msg4) to the terminal device, and correspondingly, the terminal device receives Msg4 from the network device.

Msg4 may also be referred to as a random access message 4. Msg4 includes a contention resolution message.

The contention resolution message includes a terminal device contention resolution identifier.

It may be understood that, when the terminal device receives the contention resolution message during running of the RA contention resolution timer, and a contention resolution identifier of the terminal device is consistent with the identification information of the terminal device in S103, the terminal device successfully performs random access to the network device; or when the terminal device does not receive the contention resolution message during running of the RA contention resolution timer, and/or a contention resolution identifier of the terminal device is inconsistent with the identification information of the terminal device in S103, the terminal device may perform S101 again.

In another possible implementation, a specific procedure of CBRA in two-step random access may be shown in FIG. 2.

S201: A terminal device sends messageA (MessageA, MsgA) to a network device, and correspondingly, the network device receives MsgA from the terminal device.

MsgA may be referred to as a random access message A. MsgA includes a random access preamble and a physical uplink shared channel (physical uplink shared channel, PUSCH) payload (payload).

For the random access preamble, refer to the random access preamble in S101. The PUSCH payload may include uplink information. For the uplink information, refer to the uplink information in S103.

It may be understood that, after sending MsgA, the terminal device may start or restart a RA contention resolution timer.

S202: The network device sends messageB (MessageB, MsgB) to the terminal device, and correspondingly, the terminal device receives MsgB from the network device.

MsgB may be referred to as a random access message B. When the network device receives and decodes the random access preamble and the PUSCH payload, MsgB includes an RAR, and the RAR may include one or more of the following: a contention resolution identifier of the terminal device, TA time adjustment information, or a C-RNTI.

It may be understood that, when the terminal device receives the RAR during running of the RA contention resolution timer, and the contention resolution identifier of the terminal device is consistent with random access identifier information in S201, the terminal device successfully performs random access to the network device; or when the terminal device does not receive the RAR during running of the RA contention resolution timer, and/or the contention resolution identifier of the terminal device is inconsistent with random access identifier information in S201, the terminal device may perform S201 again.

When the network device receives and decodes the random access preamble, but does not decode the PUSCH payload, MsgB may indicate a fallback (fallback) RAR, and the fallback (fallback) RAR may include a preamble identifier, TA time adjustment information, an uplink resource, a temporary C-RNTI, and the like.

It may be understood that, when the terminal device receives the fallback RAR during running of the RA contention resolution timer, and the contention resolution identifier of the terminal device is consistent with random access identifier information in S201, two-step random access falls back to four-step random access, and the terminal device may continue the following steps:

S203: The terminal device sends Msg3 to the network device, and correspondingly, the terminal device receives Msg3 from the network device.

For Msg3, refer to Msg3 in S103. Details are not described herein again.

S204: The network device sends Msg4 to the terminal device, and correspondingly, the terminal device receives Msg4 from the network device.

For Msg4, refer to Msg4 in S104. Details are not described herein again.

### (3) CFRA

In CFRA, a terminal device may initiate random access based on a dedicated/independent random access resource. In other words, no random access conflict exists between different terminal devices.

In a possible implementation, a specific procedure of CFRA in four-step random access may be shown in FIG. 3.

S301: A network device sends dedicated random access resource information to a terminal device, and correspondingly, the terminal device receives the dedicated random access resource information from the network device.

S302: The terminal device sends Msg1 to the network device, and correspondingly, the terminal device receives Msg1 from the network device.

Optionally, Msg1 may include a dedicated random access preamble.

It may be understood that, the terminal device may send the dedicated random access preamble on an RO, or the terminal device may send the random access preamble on a dedicated RO, or the terminal device sends the dedicated random access preamble on a dedicated RO. This is not limited.

S303: The network device sends Msg2 to the terminal device, and correspondingly, the terminal device receives Msg2 from the network device.

Msg2 includes an RAR, and the RAR indicates that the terminal device successfully performs random access to the network device.

In another possible implementation, a specific procedure of CFRA in two-step random access may be shown in FIG. 4.

S401: A network device sends dedicated random access resource information and dedicated PUSCH resource information to a terminal device, and correspondingly, the terminal device receives the dedicated random access resource information and the dedicated PUSCH resource information from the network device.

S402: The terminal device sends MsgA to the network device, and correspondingly, the network device receives MsgA from the terminal device.

S403: The network device sends MsgB to the terminal device, and correspondingly, the terminal device receives MsgB from the network device.

Based on the foregoing descriptions of a random access procedure, after Msg4 or MsgB, the terminal device may be further scheduled to continue to perform uplink transmission (which may be referred to as message5 (Message5, Msg5) or subsequent uplink transmission). To be specific, the terminal device may send uplink information (or an uplink message) to the network device. The uplink information may be used for registration, user equipment (user equipment, UE) identity identification, UE authentication, security, UE capability reporting, and the like.

### (4) Uplink transmission enhancement

In a non-terrestrial network (non-terrestrial network, NTN) scenario, a long distance between a network device and a terminal device causes a large signal transmission loss, and a limited transmit power of the terminal device causes a limited uplink budget. In this case, an information amount (for example, a bit quantity) of one piece of uplink information sent by the terminal device is small. Consequently, after performing random access to the network device, the terminal device needs to send a plurality of pieces of uplink information to the network device to complete link establishment. However, the network device schedules an uplink resource (for example, a PUSCH resource) a plurality of times, so that the terminal device sends the plurality of pieces of uplink information to the network device on a plurality of uplink resources, which causes a long transmission delay.

It may be understood that, in a terrestrial network scenario, a terminal device and a network device also have the foregoing similar problem. To be specific, the terminal device needs to send a plurality of pieces of uplink information to the network device (for example, a base station) to complete link establishment, and the network device schedules an uplink resource a plurality of times, which causes a long transmission delay.

Therefore, the terminal device may request uplink transmission enhancement. To be specific, the network device may schedule a plurality of uplink resources at one time based on the request for uplink transmission enhancement (instead of scheduling the plurality of uplink resources at a plurality of times), and the terminal device may send the uplink information to the network device on the plurality of uplink resources, thereby reducing a transmission delay.

In a possible implementation, the network device may indicate a quality threshold to the terminal device, and send a reference signal to the terminal device. Correspondingly, the terminal device may determine a measurement result based on the reference signal. When the measurement result is less than or equal to the quality threshold, the terminal device may request uplink transmission enhancement from the network device in Msg3 or MsgA. Further, after determining that the terminal device requests uplink transmission enhancement, the network device may indicate one or more PUSCH resources to the terminal device in Msg4 or MsgB, and the terminal device may send the uplink information on the one or more PUSCH resources. Correspondingly, the network device may receive the uplink information from the terminal device on the one or more PUSCH resources, which can prevent, as much as possible, the network device from scheduling the uplink resource a plurality of times, thereby reducing a transmission delay.

However, the one or more PUSCH resources may overlap another resource, for example, overlap a random access resource. Consequently, the network device may simultaneously receive uplink information of one terminal device and a random access message of another terminal device on an overlapping resource. If the network device does not have a parallel receiving capability, receiving fails, which affects communication performance.

Therefore, how the terminal device performs uplink sending to ensure that the network device implements uplink receiving, thereby ensuring communication reliability and improving communication performance becomes an urgent technical problem to be resolved.

To resolve the foregoing technical problem, this application provides a communication method. The method includes: A terminal device sends first indication information; and sends first information. The first indication information indicates a capability of the terminal device to avoid a second resource when sending the first information on a first resource, and the second resource being a resource, in the first resource, that overlaps a third resource.

In this embodiment of this application, the terminal device sends the first indication information to a network device, so that the network device can determine whether the terminal device supports avoiding the second resource when sending the first information on the first resource, and the network device can coordinate, with the terminal device based on the first indication information, a resource for transmitting the first information. This can prevent, as much as possible, the network device from receiving the first information and other information (the other information is information transmitted on the third resource) on an overlapping resource, thereby ensuring communication reliability and improving communication performance.

The technical solutions in embodiments of this application may be applied to various communication systems. The communication system may be a 3rd generation partnership project (3rd generation partnership project, 3GPP) communication system, for example, 4th generation (4th generation, 4G), long term evolution (long term evolution, LTE), a 5th generation (5th generation, 5G) mobile communication system, a new radio (new radio, NR) system, an LTE and 5G hybrid networking system, a non-terrestrial communication network (non-terrestrial network, NTN) system, a 6th generation (6th generation, 6G) mobile communication system or another evolved mobile communication system after 5G, a vehicle-to-everything (vehicle-to-everything, V2X) system, a device-to-device (device-to-device, D2D) communication system, a machine-to-machine (machine-to-machine, M2M) communication system, an internet of things (internet of things, IoT), a narrowband-internet of things (narrowband-internet of things, NB-IoT), another next-generation communication system, an integrated sensing and communication system, a satellite communication system, or the like. The communication system may alternatively be a non-3GPP communication system, for example, a wireless local area network (wireless local area network, WLAN) system such as wireless fidelity (wireless fidelity, Wi-Fi). This is not limited.

An NTN is a general term of flight object networks, including a satellite communication network, a high altitude platform (high altitude platform station, HAPS) station, and an air-to-ground network.

For example, an application scenario of the NTN may include an area with poor land coverage, for example, marine communication, a public safety requirement, inter-aircraft communication, and railway communication, to provide a mobile broadband service for a user.

The satellite communication network is based on a satellite platform, and mainly includes a low earth orbit (low earth orbit, LEO) satellite, a medium earth orbit (medium earth orbit, MEO) satellite, and a geostationary earth orbit (geostationary earth orbit, GEO) satellite. The HAPS may be carried on an airborne platform (for example, an aircraft, a balloon, or an airship), and the HAPS may serve as a mobile communication network device to provide a mobile service by using a same frequency band as a terrestrial mobile network.

The technical solution in this embodiment of this application may be applied to various communication scenarios, for example, may be applied to one or more of the following communication scenarios: a service scenario with a low-latency and high-reliability requirement, enhanced mobile broadband (enhanced mobile broadband, eMBB), ultra-reliable and low latency communications (ultra-reliable and low latency communications, URLLC), machine type communication (machine type communication, MTC), massive machine type communication (massive machine type communication, mMTC), enhanced machine type communication (enhanced machine type communication, eMTC), an IoT, a narrowband internet of things (narrowband internet of thing, NB-IoT), customer premises equipment (customer premises equipment, CPE), augmented reality (augmented reality, AR), virtual reality (virtual reality, VR), D2D, V2X, vehicle to vehicle (vehicle to vehicle, V2V), and the like.

Embodiments of this application are applicable to both a homogeneous network scenario and a heterogeneous network scenario, and have no limitation on transmission points. Embodiments of this application may be applied to coordinated multipoint transmission between macro base stations, between micro base stations, and between a macro base station and a micro base station, and are applicable to a frequency division multiplexing system, a time division multiplexing system, a duplex system, an access and backhaul system, a relay system, and the like. Embodiments of this application are applicable to a low-frequency scenario (sub 6G), a highfrequency scenario (above 6G), terahertz, optical communication, and the like. This is not limited.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

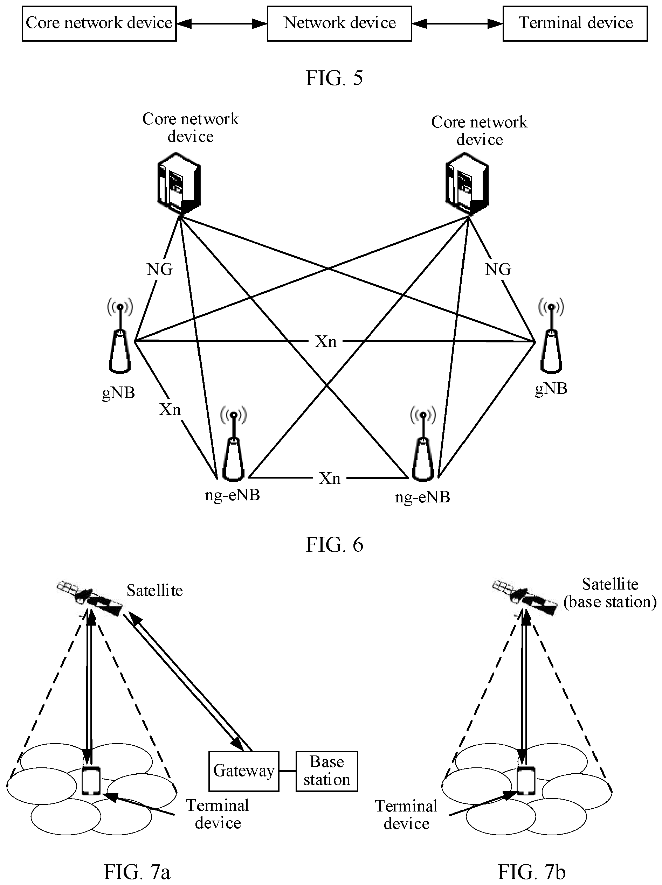

For example, FIG. 5 is a diagram of a structure of a communication system according to this application. The communication system may include one or more core network devices, one or more network devices, and one or more terminal devices.

The communication system may complete a specific function, for example, synchronization, channel estimation, or sensing.

Unless otherwise specified, the core network device in FIG. 5 may be the core network device, or may be a component (for example, a processor, a chip, or a chip system) in the core network device, or may be a logical module or software that can implement all or a part of functions of the core network device.

Unless otherwise specified, the network device in FIG. 5 may be the network device, or may be a component (for example, a processor, a chip, or a chip system) in the network device, or may be a logical module or software that can implement all or a part of functions of the network device.

Unless otherwise specified, the terminal device in FIG. 5 may be the terminal device, or may be a component (for example, a processor, a chip, or a chip system) in the terminal device, or may be a logical module or software that can implement all or a part of functions of the terminal device.

The terminal device in this embodiment of this application may be located in beam/cell coverage of the network device, and the network device may provide a communication service for the terminal device.

The terminal device in FIG. 5 may be a device having a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

Optionally, the terminal device in this embodiment of this application may be a userside device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) that evolves from 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, an uncrewed aerial vehicle, a robot, a smart point of sale (point of sale, POS) machine, customer premises equipment (customer premises equipment, CPE) or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in an IoT, for example, a terminal in V2X (for example, an internet of vehicles device), a terminal in D2D communication, or a terminal in M2M communication. The terminal may be mobile or fixed.

The network device in FIG. 5 may be any device that is deployed in an access network and that can perform wireless communication with a terminal device, or may be a chip or a chip system that may be disposed in the device, or may be a logical node or a logical module or a function implemented by software, and may be configured to implement functions such as a radio physical control function, resource scheduling and radio resource management, radio access control, and mobility management. Specifically, the network device may be a device supporting wired access, or may be a device supporting wireless access.

Optionally, the network device in this embodiment of this application is a device that connects a terminal device to a wireless network. The network device may be a node in a radio access network (radio access network, RAN), or may be a base station, and may be referred to as a radio access network node (or a device).

For example, the network device may include an evolved NodeB (NodeB or eNB or e-NodeB, evolved NodeB) in an LTE system or an LTE-advanced (LTE-advanced, LTE-A) system, for example, a conventional macro base station eNB and a micro base station eNB in a heterogeneous network scenario. Alternatively, the first network element may include a next generation NodeB (next generation NodeB, gNB) in the NR system. Alternatively, the network device may include a transmission reception point (transmission reception point, TRP), a home NodeB (for example, a home evolved NodeB, or a home NodeB, HNB), a baseband unit (baseband unit, BBU), a baseband pool (BBU pool), or a Wi-Fi access point (access point, AP). Alternatively, the network device may include a base station in an NTN, to be specific, may be deployed on an aerial platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that is in the IoT and that implements functions of a base station, for example, a device that is in uncrewed aerial vehicle communication, V2X, D2D, or machine-to-machine (machine-to-machine, M2M) and that implements the functions of the base station.

Alternatively, the network device may be a module or unit that can implement a part of functions of the base station. For example, the network device may be a CU, a DU, a CU-control plane (control plane, CP), a CU-user plane (user plane, UP), or an RU. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of a software module and a hardware module.

Optionally, the base station in this embodiment of this application may include various forms of base stations, for example, a macro base station, a micro base station (also referred to as a small cell), a relay station, an access point, a home NodeB, a TRP, a transmitting point (transmitting point, TP), or a mobile switching center. This is not specifically limited in this embodiment of this application.

The core network device in FIG. 5 may include a user plane network element and a mobility management network element.

The user plane network element mainly responds to a request of a session management network element, and serves as a connection point between an access network device and a data network.

The mobility management network element is mainly responsible for work such as access authentication and mobility management of the terminal device, and signaling exchange between function network elements, for example, managing a registration status of a user, a connection status of the user, user registration and network access, tracking area update, user authentication during a cell handover, and key security.

It may be understood that, as shown in FIG. 6, the core network device may be connected to one or more network devices, a port between the core network device and the network device is NG, and the network device may be a gNB (namely, a 5G base station), or may be an ng-eNB (namely, a 4G base station connected to a 5G core network).

The gNB may provide user plane and control plane protocol functions of 5G NR for the terminal device, and the ng-eNB may provide user plane and control plane protocol functions of 4G E-UTRA for the terminal device.

An interface between the core network device and the base station is NG, and an interface between base stations is Xn.

Based on the foregoing descriptions of the communication system, the network device, and the terminal device, in a possible implementation, the NTN system may have a transparent payload architecture (transparent payload) and a regenerative payload architecture (regenerative payload).

In the transparent payload architecture, a satellite may implement signal forwarding but has no data processing capability.

For example, as shown in FIG. 7a, a base station may be located on the ground, the satellite may be connected to the base station through a gateway (gateway) on the ground, and a terminal device is located in coverage of the satellite. When the terminal device communicates with the base station, signaling forwarding may be performed through the satellite.

The data processing function still belongs to the base station. A link between the satellite and the terminal device is referred to as a service link (service link), and a link between the satellite and the base station is a feeder link (feeder link).

For another example, as shown in FIG. 7b, a terminal device is located in coverage of a satellite. When a base station is located on the satellite, the satellite may have all data processing functions of the base station; or when a DU is located on the satellite, the satellite may have a part of data processing functions of a base station. The satellite may communicate with the terminal device, and implement data processing.

A link between the satellite (which may also be referred to as a base station) and the terminal device may be a service link.

It may be understood that, based on a movement status of an NTN cell in a ground coverage area, the NTN cell may be classified into an earth-fixed type (earth-fixed), a quasi-earth-fixed type (quasi-earth-fixed), and an earth-moving (earth-moving).

A coverage area of the earth-fixed type of NTN cell is fastened to an area on the ground, which is continuous fixed-point coverage. An NTN cell provided by a GEO satellite is of the earth-fixed type.

A coverage area of the quasi-earth-fixed type of NTN cell is fastened to an area on the ground within a period of time, and is changed to another area on the ground after the period of time, which is fixed-point coverage within a period of time. A LEO satellite and a MEO satellite may provide a quasi-earth-fixed type of NTN cell.

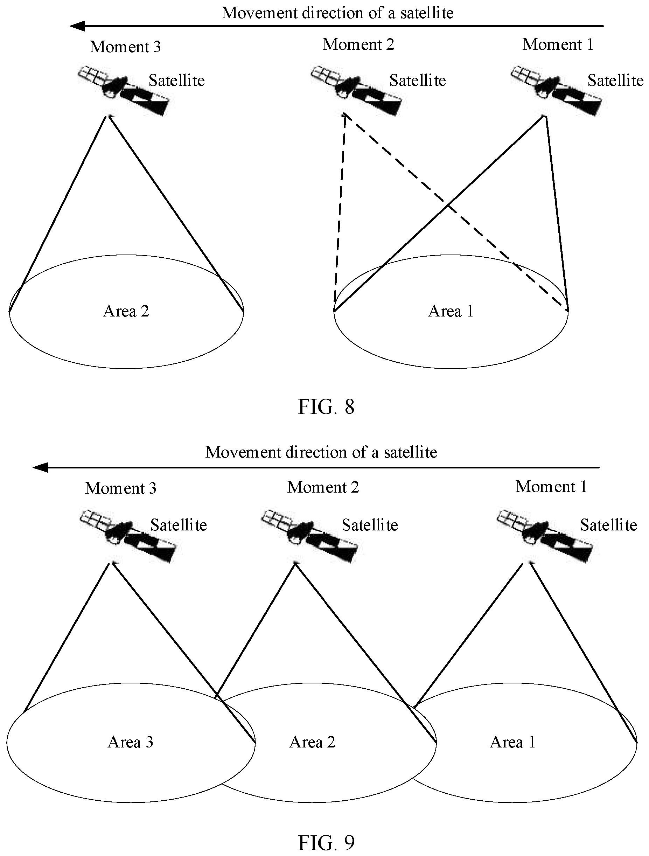

For example, as shown in FIG. 8, as a satellite moves, a coverage area of the satellite is an area 1 at a moment 1 and a moment 2, and the coverage area of the satellite is an area 2 at a moment 3.

A coverage area of an earth-moving type of NTN cell slides on the ground. The LEO satellite and the MEO satellite may provide an earth-moving type of NTN cell

For example, as shown in FIG. 9, as a satellite moves, a coverage area of the satellite is an area 1 at a moment 1, the coverage area of the satellite is an area 2 at a moment 2, and the coverage area of the satellite is an area 3 at a moment 3.

It should be noted that the communication system described in embodiments of this application is intended to describe the technical solutions in embodiments of this application more clearly, and does not constitute any limitation on the technical solutions provided in embodiments of this application. A person of ordinary skill in the art may learn that the technical solutions provided in embodiments of this application are also applicable to a similar technical problem as a network architecture evolves and a new service scenario emerges.

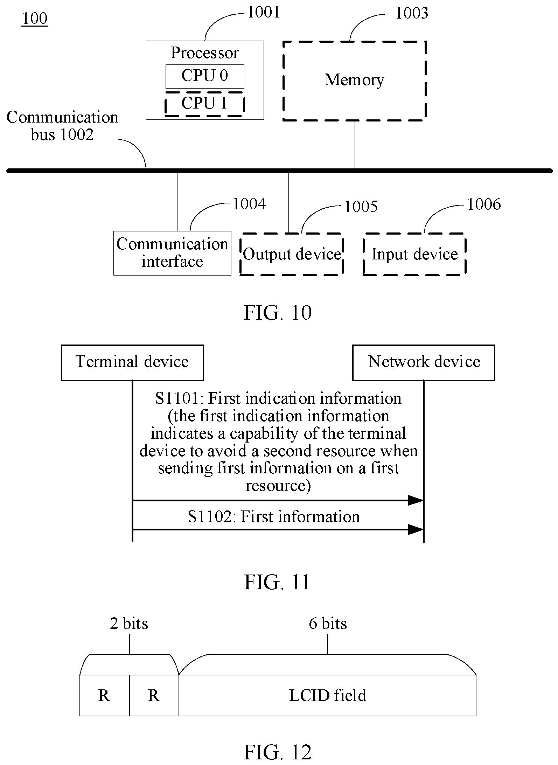

During specific implementation, the core network device, the network device, and the terminal device shown in FIG. 5 may use a composition structure shown in FIG. 10, or include components shown in FIG. 10. FIG. 10 is a diagram of composition of a communication apparatus 100 according to an embodiment of this application. The communication apparatus 100 may be a core network device, a chip or a system on chip of the core network device, or a component that completes a part or all of functions of the core network device; or may be a network device, a chip or a system on chip of the network device, or a component that completes a part or all of functions of the network device; or may be a terminal device, a chip or a system on chip of the terminal device, or a component that completes a part or all of functions of the terminal device.

As shown in FIG. 10, the communication apparatus 100 includes one or more processors 1001. Further, the communication apparatus 100 may further include a communication bus 1002 and at least one communication interface (FIG. 10 is merely an example, and an example in which the communication apparatus 100 includes a communication interface 1004 and one processor 1001 is used for description). Optionally, the communication apparatus 100 may further include a memory 1003.

The processor 1001 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 1001 may include one or more CPUs such as a CPU 0 and a CPU 1 in FIG. 10.

The communication bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus. The communication bus 1002 is configured to connect different components in the communication apparatus 100, so that the different components in the communication apparatus 100 may communicate and interact with each other.

The communication interface 1004 may be a transceiver module, and is configured to communicate with another device or a communication network. The communication network may be, for example, Ethernet (Ethernet), a radio access network (radio access network, RAN), or a wireless local area network (wireless local area network, WLAN). For example, the communication interface 1004 may be an apparatus like a transceiver or a transceiver machine. Alternatively, the communication interface 1004 may be a transceiver circuit located in the processor 1001, and is configured to implement signal input and signal output of the processor.

The memory 1003 may be an apparatus having a storage function. For example, the memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be accessed by a computer and that can be configured to carry or store expected program code in a form of instructions or a data structure, but is not limited thereto. The memory may exist independently and is connected to the processor through the communication bus 1002. The memory may alternatively be integrated with the processor.

For example, the memory 1003 is configured to store computer-executable instructions for performing the solutions of this application, and the processor 1001 controls execution. The processor 1001 is configured to execute the computer-executable instructions stored in the memory 1003, to implement the method provided in embodiments of this application.

Alternatively, optionally, in this embodiment of this application, the processor 1001 may perform functions related to processing in the method provided in the following embodiments in this application, and the communication interface 1004 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the communication apparatus 100 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive user input in a plurality of manners. For example, the input device 1006 may be a mouse, a keyboard, a touchscreen device, or a sensor device.

It should be noted that, the composition structure shown in FIG. 10 does not constitute a limitation on the communication apparatus. In addition to the components shown in FIG. 10, the communication apparatus may include more or fewer components than those shown in the figure, combine some components, or have different component arrangements.

The following describes, with reference to the accompanying drawings, the communication method provided in embodiments of this application. It may be understood that, in embodiments of this application, the network device or the terminal device may perform some or all of steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

FIG. 11 is a diagram of interaction of a communication method according to this application. The communication method is described by using interaction between a network device and a terminal device as an example. Certainly, an action of the network device in the method may alternatively be performed by an apparatus/module in the network device, for example, a chip, a processor, or a processing unit in the network device. An action of the terminal device in the method may alternatively be performed by an apparatus/module in the terminal device, for example, a chip, a processor, or a processing unit in the terminal device. This is not specifically limited in this embodiment of this application. In this embodiment of this application, steps performed by a single execution body (for example, the network device or the terminal device) may alternatively be performed by a plurality of execution bodies, and these execution bodies may be logically and/or physically separated. For example, as shown in FIG. 11, the communication method includes the following steps.

S1101: The terminal device sends first indication information to the network device, and correspondingly, the network device receives the first indication information from the terminal device.

The first indication information indicates a capability of the terminal device to avoid a second resource when sending first information on a first resource.

The second resource being a resource, in the first resource, that overlaps a third resource.

Optionally, the resource may be a time domain resource; or the resource may be a frequency domain resource; or the resource may be a code domain resource; or the resource may be a time-frequency domain resource; or the resource may be a time-frequency-code domain resource. This is not limited.

In a first example, the resource is a frequency domain resource. If the first resource is a resource block 1 to a resource block 10, and the third resource is a resource block 6 to a resource block 15, the resource on which the first resource overlaps the third resource may be the resource block 6 to the resource block 10. In other words, the second resource may be the resource block 6 to the resource block 10.

In a second example, the resource is a time domain resource. If the first resource is a slot 1 to a slot 10, and the third resource is a slot 6 to a slot 15, the resource on which the first resource overlaps the third resource may be the slot 6 to the slot 10. In other words, the second resource may be the slot 6 to the slot 10.

In a third example, the resource is a time-frequency domain resource. If the first resource is a slot 1 to a slot 10 in time domain and is a resource block 1 to a resource block 10 in frequency domain, and the third resource is a slot 6 to a slot 15 in time domain and is a resource block 6 to a resource block 15 in frequency domain, a time domain resource on which the first resource overlaps the third resource in time domain may be the slot 6 to the slot 10, and a frequency domain resource on which the first resource overlaps the third resource in frequency domain is the resource block 6 to the resource block 10. In other words, the second resource is the slot 6 to the slot 10 in time domain and the resource block 6 to the resource block 10 in frequency domain.

Optionally, the first resource may be one or more PUSCH resources.

Optionally, the third resource may be a random access resource.

For example, the third resource may be a shared random access resource (for example, a random access resource used in a contention-based random access process), or may be a dedicated/independent random access resource (for example, a random access resource used in a contention-free random access process).

It may be understood that, when the second resource is a resource on which the PUSCH resource overlaps the random access resource, the network device may receive, on the overlapping resource, the first information from the terminal device and a random access message from another terminal device.

The first indication information indicates the capability of the terminal device to avoid the second resource when sending the first information on the first resource. Alternatively, it may be described as follows: The first indication information indicates whether the terminal device supports sending the first information on a resource in the first resource other than the second resource. Alternatively, it may be described as follows: The first indication information indicates whether the terminal device supports avoiding the third resource when sending the first information on the first resource. Alternatively, it may be described as follows: The first indication information indicates whether the terminal device supports avoiding the second resource when sending the first information on the first resource.

For example, the first indication information is 1 bit. When a bit value is 1, it may indicate that the terminal device supports avoiding the second resource when sending the first information on the first resource; or when a bit value is 0, it may indicate that the terminal device does not support avoiding the second resource when sending the first information on the first resource. Alternatively, when a bit value is 0, it may indicate that the terminal device supports avoiding the second resource when sending the first information on the first resource; or when a bit value is 1, it may indicate that the terminal device does not support avoiding the second resource when sending the first information on the first resource.

Optionally, the first indication information may be located in a first message.

The first message may be one or more of the following: a random access message 3 (namely, Msg3) or a random access message B (namely, MsgB).

Further, the first indication information may be located in a subheader of a MAC PDU in the first message, for example, a subheader of a MAC PDU in Msg3, or a subheader of a MAC PDU in MsgB.

The subheader of the MAC PDU may also be understood as a subheader of a MAC subPDU in the MAC PDU.

For example, the subheader of the MAC PDU may be shown in FIG. 12. The subheader of the MAC PDU may include an LCID field and a reserved bit (the reserved bit may be shown as R in FIG. 12).

The LCID field may occupy six bits, and the bits in the LCID field may form an LCID value. For example, when a bit value of a first bit in the LCID field is 1, a bit value of a second bit is 0, a bit value of a third bit is 0, a bit value of a fourth bit is 1, a bit value of a fifth bit is 0, and a bit value of a sixth bit is 0, the LCID value is 100100.

It may be understood that the LCID field may form 64 LCID values, and different LCID values may indicate different information.

The reserved bit may be 1 bit, or may be a plurality of bits (for example, 2 bits).

Optionally, the first indication information may be indicated by one or more of the following fields in the subheader of the MAC PDU: the LCID field or a first field.

The first field may be one or more reserved bits in the subheader of the MAC PDU.

It may be understood that after the reserved bit is used, the reserved bit cannot be referred to as a reserved bit (that is, the reserved bit may be referred to as the first field). Correspondingly, the reserved bit may be assigned a corresponding meaning or function.

In a first possible design, the first indication information may be indicated by the LCID field. Specifically, the first indication information may be indicated by the LCID value.

In an example, two LCID values (for example, LCID1 and LCID2) may be determined. LCID1 may indicate that the terminal device supports avoiding the second resource when sending the first information on the first resource, and LCID2 may indicate that the terminal device does not support avoiding the second resource when sending the first information on the first resource.

For example, the LCID field is 6 bits. When the LCID value is 111111 (that is, LCID1 is 111111), it may indicate that the terminal device supports avoiding the second resource when sending the first information on the first resource; or when the LCID value is 100000 (that is, LCID2 is 100000), it may indicate that the terminal device does not support avoiding the second resource when sending the first information on the first resource.

In another example, one LCID value (for example, LCID1) may be determined. LCID1 may indicate that the terminal device supports avoiding the second resource when sending the first information on the first resource. Correspondingly, when the terminal device does not send LCID1 (for example, the terminal device sends any LCID value other than LCID1), it may be considered by default that the terminal device does not support avoiding the second resource when sending the first information on the first resource.

In a second possible design, the first indication information may be indicated by the first field.

In an example, the first field occupies 1 reserved bit. When a bit value is 1, it may indicate that the terminal device supports avoiding the second resource when sending the first information on the first resource; or when a bit value is 0, it may indicate that the terminal device does not support avoiding the second resource when sending the first information on the first resource. Alternatively, when a bit value is 0, it may indicate that the terminal device supports avoiding the second resource when sending the first information on the first resource; or when a bit value is 1, it may indicate that the terminal device does not support avoiding the second resource when sending the first information on the first resource.

In another example, the first field occupies 2 reserved bits. When a bit value is 11, it may indicate that the terminal device supports avoiding the second resource when sending the first information on the first resource; or when a bit value is 00, 01, or 10, it may indicate that the terminal device does not support avoiding the second resource when sending the first information on the first resource. Alternatively, for example, the first field occupies 2 reserved bits. When a bit value is 00, it may indicate that the terminal device supports avoiding the second resource when sending the first information on the first resource; or when a bit value is 11, 01, or 10, it may indicate that the terminal device does not support avoiding the second resource when sending the first information on the first resource.

In a third possible design, the first indication information may be indicated by the LCID field and the first field.

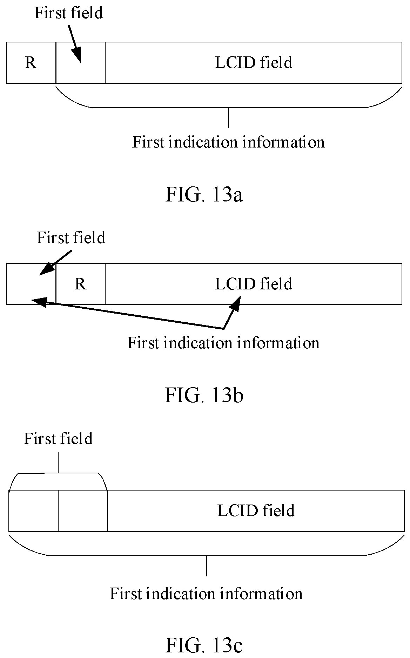

The first indication information may be shown in FIG. 13a to FIG. 13c, and the first indication information may be jointly indicated by the LCID field and the first field.

The first field may occupy 1 bit, or may occupy a plurality of bits. This is not limited.

When the first field occupies 1 bit, the first indication information may be shown in FIG. 13a and FIG. 13b; or when the first field occupies 2 bits, the first indication information may be shown in FIG. 13c.

In a possible implementation, the first indication information is indicated by a value of the LCID field in logical channel identifier space.

The logical channel identifier space is indicated by the first field.

In a possible embodiment, for example, the first field occupies 1 reserved bit. When a bit value of the first field is 1, the first indication information may be indicated by a value of a logical identifier field in first logical channel identifier space; or when a bit value of the first field is 0, the first indication information may be indicated by a value of a logical field in second logical identifier space.

The first logical channel identifier space may be a new LCID value table (for example, a first LCID value table), and the second logical channel identifier space may be an existing LCID value table (for example, a second LCID value table).

For example, in the first LCID value table, LCID1 indicates that the terminal device supports avoiding the second resource when sending the first information on the first resource, and in the second LCID value table, LCID1 indicates that a size of CCCH information is 48 bits. In this case, when a bit value of the first field is 1, it may be determined, based on the first LCID value table, that LCID1 indicates that the terminal device supports avoiding the second resource when sending the first information on the first resource; or when a bit value of the first field is 0, it may be determined, based on the second LCID value table, that LCID1 indicates that the size of the CCCH information is 48 bits.

Based on this possible implementation, a new LCID value table may be defined. The new LCID value table may correspond to new logical channel identifier space, which may facilitate another use and purpose in a future communication system. In addition, the new LCID value table does not affect use of an existing LCID value table, and may be compatible with an existing communication system and the future communication system.

In another possible implementation, the first indication information is indicated by an extended LCID field.

The extended LCID field includes the LCID field and the first field.

In a possible embodiment, for example, the LCID field occupies 6 bits, and the first field occupies 1 bit. In this case, the extended LCID field may be 7 bits.

In an example, two LCID values (for example, LCID3 and LCID4) may be determined. LCID3 may indicate that the terminal device supports avoiding the second resource when sending the first information on the first resource, and LCID4 may indicate that the terminal device does not support avoiding the second resource when sending the first information on the first resource.

For example, when the LCID value is 1111111 (that is, LCID3 is 1111111), it may indicate that the terminal device supports avoiding the second resource when sending the first information on the first resource; or when the LCID value is 1100000 (that is, LCID4 is 1100000), it may indicate that the terminal device does not support avoiding the second resource when sending the first information on the first resource.

In another example, one LCID value (for example, LCID3) may be determined. LCID3 may indicate that the terminal device supports avoiding the second resource when sending the first information on the first resource. Correspondingly, when the terminal device does not send LCID3 (for example, the terminal device sends any LCID value other than LCID3), it may be considered by default that the terminal device does not support avoiding the second resource when sending the first information on the first resource.

Based on this possible implementation, the first indication information is indicated by the extended LCID field, and more selectable values of the extended LCID field may be determined. For example, the original LCID field occupies 6 bits, and there may be 64 LCID values; and the extended LCID field occupies 7 bits, and there may be 128 LCID values. A quantity of selectable values is nearly doubled, which can facilitate another use and purpose in the future communication system.

S1102: The terminal device sends the first information to the network device, and correspondingly, the network device receives the first information from the terminal device.

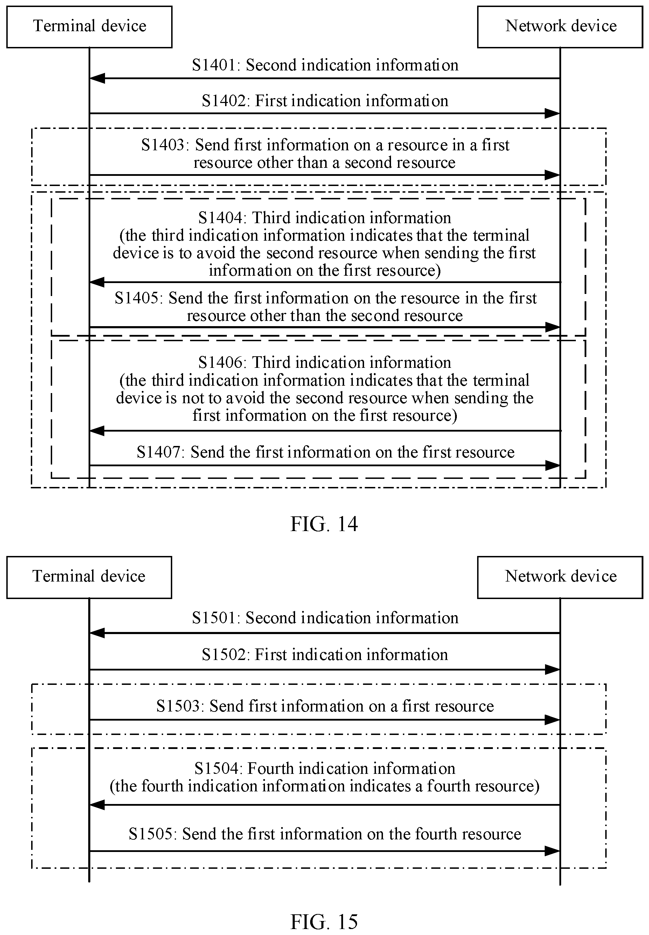

The network device may determine, based on the first indication information, whether the terminal device supports avoiding the second resource when sending the first information on the first resource, and further determine a resource for sending the first information by the terminal device. Specific content may be shown in FIG. 14 to FIG. 16, and details are not described herein again.

It may be understood that the first information may be transmitted on a same resource, or may be transmitted on different resources. For example, if the first resource includes a plurality of PUSCH resources, the first information may be transmitted on the plurality of PUSCH resources.

Based on the communication method shown in FIG. 11, the terminal device sends the first indication information to the network device, so that the network device can determine whether the terminal device supports avoiding the second resource when sending the first information on the first resource, and the network device can coordinate, with the terminal device based on the first indication information, the resource for transmitting the first information. This can prevent, as much as possible, the network device from receiving the first information and other information (the other information is information transmitted on the third resource) on an overlapping resource, thereby ensuring communication reliability and improving communication performance.

Optionally, the first indication information may further indicate the size of the CCCH information.

It may be understood that the CCCH information may be carried in the random access message 3 and the random access message B.

It may be understood that, when receiving the CCCH information from the terminal device, the network device may further parse the CCCH information by determining the size of the CCCH information. In other words, if the network device does not determine the size of the CCCH information, the network device cannot parse the CCCH information.

For example, the CCCH information is carried in the random access message 3. When the network device cannot determine the size of the CCCH information, the network device cannot parse the random access message 3, and consequently, random access of the terminal device to the network device fails.

In a possible embodiment, for example, the first indication information is indicated by the LCID field. The network device may determine, based on the LCID value, whether the terminal device supports avoiding the second resource when sending the first information on the first resource, and the size of the CCCH information.

For example, there are two LCID values (for example, LCID11 and LCID12), and both LCID values indicate that the terminal device supports avoiding the second resource when sending the first information on the first resource. LCID11 may indicate that the terminal device supports avoiding the second resource when sending the first information on the first resource and that the size of the CCCH information is 48 bits. LCID12 may indicate that the terminal device supports avoiding the second resource when sending the first information on the first resource and that the size of the CCCH information is 64 bits.

In another possible embodiment, for example, the first indication information is indicated by the first field. The network device may determine, based on the first field, whether the terminal device supports avoiding the second resource when sending the first information on the first resource, and the size of the CCCH information.

For example, the first field occupies 2 reserved bits. When a bit value is 00, it may indicate that the terminal device supports avoiding the second resource when sending the first information on the first resource and that the size of the CCCH information is 48 bits; or when a bit value is 01, it may indicate that the terminal device supports avoiding the second resource when sending the first information on the first resource and that the size of the CCCH information is 64 bits; or when the bit value is 10, it may indicate that the terminal device does not support avoiding the second resource when sending the first information on the first resource and that the size of the CCCH information is 48 bits; or when the bit value is 11, it may indicate that the terminal device does not support avoiding the second resource when sending the first information on the first resource and that the size of the CCCH information is 64 bits.

It may be understood that the size of the CCCH information may also be determined based on fifth indication information. To be specific, the terminal device sends the fifth indication information to the network device. Correspondingly, the network device may determine the size of the CCCH information based on the fifth indication information.

The fifth indication information indicates the size of the CCCH information.

In an example, the fifth indication information is 1 bit. When a bit value is 0, it may indicate that the size of the CCCH information is 48 bits; or when a bit value is 1, it may indicate that the size of the CCCH information is 64 bits. Alternatively, when a bit value is 1, it may indicate that the size of the CCCH information is 48 bits; or when a bit value is 0, it may indicate that the size of the CCCH information is 64 bits.

In another example, the fifth indication information may also be indicated by the LCID field, and the network device may determine the size of the CCCH information based on the LCID value.

For example, there are two LCID values (for example, LCID5 and LCID6). LCID5 may indicate that the size of the CCCH information is 48 bits, and LCID6 may indicate that the size of the CCCH information is 64 bits.

It may be understood that, the first indication information may further indicate the size of the CCCH information, and no additional information may need to indicate the size of the CCCH information, thereby reducing signaling overheads. Alternatively, the terminal device may indicate the size of the CCCH information based on the fifth indication information, and the terminal device may dynamically separately indicate, based on an actual communication status, the capability of the terminal device to avoid the second resource when sending the first information on the first resource and/or the size of the CCCH information. This can improve flexibility of indicating, by the terminal device, the capability of the terminal device to avoid the second resource when sending the first information on the first resource and the size of the CCCH information.

Based on the foregoing descriptions of the first indication information and the fifth indication information, in a possible embodiment, the first indication information may be determined based on the first field, and the fifth indication information may be determined based on the LCID field. When a bit value of the first indication information is 1 and the LCID value is LCID5, the network device may determine that the terminal device supports avoiding the second resource when sending the first information on the first resource and that the size of the CCCH information is 48 bits; or when a bit value of the first indication information is 1 and the LCID value is LCID6, the network device may determine that the terminal device supports avoiding the second resource when sending the first information on the first resource and that the size of the CCCH information is 64 bits; or when a bit value of the first indication information is 0 and the LCID value is LCID5, the network device may determine that the terminal device does not support avoiding the second resource when sending the first information on the first resource and that the size of the CCCH information is 48 bits; or when a bit value of the first indication information is 0 and the LCID value is LCID6, the network device may determine that the terminal device does not support avoiding the second resource when sending the first information on the first resource and that the size of the CCCH information is 64 bits.

Optionally, the first indication information may be further used to request uplink transmission enhancement.

In a possible embodiment, for example, the first indication information is indicated by the LCID field. The network device may determine, based on the LCID value, whether the terminal device supports avoiding the second resource when sending the first information on the first resource, and that the terminal device requests uplink transmission enhancement.

It may be understood that, different from using the first indication information to request uplink transmission enhancement, the terminal device may send the first request information to the network device. Correspondingly, the network device may determine, based on the first request information, that the terminal device requests uplink transmission enhancement.

The first request information is used to request uplink transmission enhancement.

Optionally, the first request information may be located in a radio resource control (radio resource control, RRC) setup request message.

It may be understood that, the network device may indicate, to the terminal device based on a request of the terminal device for uplink transmission enhancement, a plurality of uplink resources used to transmit the first information, which may reduce a transmission delay compared with scheduling the uplink resource a plurality of times to transmit the first information. In this application, the first indication information may further request uplink transmission enhancement, and no additional information may need to be used to request uplink transmission enhancement, thereby reducing signaling overheads. Alternatively, the terminal device may request uplink transmission enhancement based on the first request information, and the terminal device may dynamically separately indicate, based on an actual communication status, the capability of the terminal device to avoid the second resource when sending the first information on the first resource and/or the request for uplink transmission enhancement. This can improve flexibility of indicating, by the terminal device, the capability of the terminal device to avoid the second resource when sending the first information on the first resource and the request for uplink transmission enhancement.

Based on the foregoing descriptions of the first request information and the first indication information, the first request information and the first indication information may be located in a same message, or may be located in different messages. This is not limited.

It may be understood that, the first indication information may indicate the capability of the terminal device to avoid the second resource when sending the first information on the first resource, the size of the CCCH information, and the request of the terminal device for the uplink transmission enhancement. In addition, the first indication information may further indicate other information (to be specific, the first indication information may indicate the other information on a basis of indicating the capability of the terminal device to avoid the second resource when sending the first information on the first resource, or may directly indicate the other information, or may indicate the other information on a basis of indicating the capability of the terminal device to avoid the second resource when sending the first information on the first resource, the size of the CCCH information, and the request of the terminal device for the uplink transmission enhancement). This is not limited.

Optionally, before the terminal device sends the first indication information, the network device may send second indication information to the terminal device. Correspondingly, the terminal device may receive the second indication information from the network device.

The second indication information indicates that the terminal device is allowed to send the first indication information; or the second indication information indicates that the network device supports the terminal device in sending the first indication information; or the second indication information indicates a capability of the network device to parse the first indication information.

In a first example, the second indication information is 1 bit. When a bit value is 1, it may indicate that the terminal device is allowed to send the first indication information; or when a bit value is 0, it may indicate that the terminal device is not allowed to send the first indication information. Alternatively, when a bit value is 0, it may indicate that the terminal device is allowed to send the first indication information; or when a bit value is 1, it may indicate that the terminal device is not allowed to send the first indication information.

In a second example, the second indication information is 1 bit. When a bit value is 1, it may indicate that the terminal device is allowed to send the first indication information; or when a bit value is 0, it may indicate that the terminal device is allowed to send the first indication information.

Based on the second example, when the network device sends the second indication information to the terminal device, the terminal device may send the first indication information to the network device; or when the network device does not send the second indication information to the terminal device (in other words, the terminal device does not receive the second indication information), the terminal device may not send the first indication information to the network device.

It may be understood that the second indication information may be carried in broadcast signaling (for example, system information).

It may be understood that, the terminal device may determine, based on the second indication information, that the network device can parse the first indication information. This can avoid, as much as possible, a case in which the terminal device sends the first indication information to the network device but the network device does not parse the first indication information, and ensure that the first indication information sent by the terminal device can be parsed by the network device. This can avoid, as much as possible, a communication failure caused by misalignment between the network device and the terminal device, and improve efficiency of information exchange between the network device and the terminal device.

Based on the foregoing content, this application proposes, for different scenarios, several possible designs in which the terminal device sends the first information to the network device.

In a first possible design, when a network device may parse first indication information, and the first indication information indicates that a terminal device supports avoiding a second resource when sending first information on a first resource, specific steps of communication between the network device and the terminal device may be shown in FIG. 14.

S1401: The network device sends second indication information to the terminal device, and correspondingly, the terminal device receives the second indication information from the network device.

For the second indication information, refer to the foregoing descriptions of the second indication information. Details are not described herein again.

It may be understood that, when it is considered by default that the network device supports parsing the first indication information, the network device may not send the second indication information to the terminal device (in other words, there is no S1401).

S1402: The terminal device sends the first indication information to the network device, and correspondingly, the network device receives the first indication information from the terminal device.

The first indication information indicates that the terminal device supports avoiding the second resource when sending the first information on the first resource.

Optionally, because the network device may parse the first indication information, after receiving the first indication information, the network device may no longer additionally indicate other information. To be specific, the network device considers, by default, that the terminal device sends the first information on a resource in the first resource other than the second resource (specifically shown in S1403). Alternatively, after receiving the first indication information, the network device may send third indication information to the terminal device to indicate a resource for sending the first information by the terminal device (specifically shown in S1404 to S1407). Specific steps are as follows:
S1403: The terminal device sends the first information to the network device on the resource in the first resource other than the second resource; and correspondingly, the network device receives the first information from the terminal device on the resource in the first resource other than the second resource.

It may be understood that, the terminal device does not send the first information to the network device on the second resource, and correspondingly, the network device does not receive the first information from the terminal device on the second resource.

Based on S1403, the terminal device may directly send the first information on the resource in the first resource other than the second resource, and the network device does not need to additionally indicate other information. This can reduce transmission overheads. In addition, it can be ensured, as much as possible, that the network device is not interfered with by other information (the other information is information transmitted on a third resource) when receiving the first information, thereby improving communication reliability and improving communication performance.

S1404: The network device sends the third indication information to the terminal device, and correspondingly, the terminal device receives the third indication information from the network device.

The third indication information may be carried in Msg4 or MsgB.

The third indication information indicates that the terminal device is to avoid the second resource when sending the first information on the first resource (or the third indication information may indicate the terminal device to send the first information on the resource in the first resource other than the second resource).

S1405: The terminal device sends the first information to the network device on the resource in the first resource other than the second resource; and correspondingly, the network device receives the first information from the terminal device on the resource in the first resource other than the second resource.

S1406: The network device sends the third indication information to the terminal device, and correspondingly, the terminal device receives the third indication information from the network device.

The third indication information indicates that the terminal device is not to avoid the second resource when sending the first information on the first resource (or the third indication information may indicate the terminal device to send the first information on the first resource).

S1407: The terminal device sends the first information to the network device on the first resource, and correspondingly, the network device receives the first information from the terminal device on the first resource.

Based on 1404 to S1407, the network device may indicate, based on an actual communication status, the resource for sending the first information by the terminal device, thereby improving flexibility of determining the resource for sending the first information. The third indication information may indicate the terminal device to avoid the second resource when sending the first information, and the terminal device may send the first information on the resource in the first resource other than the second resource, to ensure, as much as possible, that the network device is not interfered with by other information (the other information is information transmitted on the third resource) when receiving the first information, thereby improving communication reliability and improving communication performance. Alternatively, the third indication information may indicate the terminal device not to avoid the second resource when sending the first information, so that operation complexity of sending the first information by the terminal device can be reduced to improve operating efficiency of the terminal device, which is more friendly to an implementation of the terminal device.

Based on the descriptions of the third indication information in S1404 to S1407, in a possible embodiment, that the third indication information is 1 bit is used as an example. When a bit value is 1, it may indicate that the network device indicates that the terminal device is to avoid the second resource when sending the first information on the first resource; or when a bit value is 0, it may indicate that the network device indicates that the terminal device is not to avoid the second resource when sending the first information on the first resource. Alternatively, when a bit value is 0, it may indicate that the network device indicates that the terminal device is to avoid the second resource when sending the first information on the first resource; or when a bit value is 1, it may indicate that the network device indicates that the terminal device is not to avoid the second resource when sending the first information on the first resource.

In another possible embodiment, that the third indication information is 1 bit is used as an example. When a bit value is 1, it may indicate that the network device indicates that the terminal device is to avoid the second resource when sending the first information on the first resource; or when a bit value is 0, it may indicate that the network device indicates that the terminal device is to avoid the second resource when sending the first information on the first resource.

For example, when the network device sends the third indication information to the terminal device, the terminal device can avoid the second resource when sending the first information on the first resource; or when the network device does not send the third indication information to the terminal device, the terminal device may not avoid the second resource when sending the first information on the first resource.

Based on the foregoing possible embodiment, the network device may not need to perform S1406. When the terminal device does not receive the third indication information, the terminal device may directly perform S1407.

In a second possible design, when a network device may parse first indication information, and the first indication information indicates that a terminal device does not support avoiding a second resource when sending first information on a first resource, specific steps of communication between the network device and the terminal device may be shown in FIG. 15.

S1501: The network device sends second indication information to the terminal device, and correspondingly, the terminal device receives the second indication information from the network device.

For S1501, refer to S1401. Details are not described herein again.

S1502: The terminal device sends the first indication information to the network device, and correspondingly, the network device receives the first indication information from the terminal device.

The first indication information indicates that the terminal device does not support avoiding the second resource when sending the first information on the first resource.

Optionally, because the network device may parse the first indication information, after receiving the first indication information, the network device may no longer additionally indicate other information. To be specific, the network device considers, by default, that the terminal device sends the first information on the first resource (specifically shown in S1503). Alternatively, after receiving the first indication information, the network device may send fourth indication information to the terminal device to indicate a resource for sending the first information by the terminal device (specifically shown in S1504 and S1505). Specific steps are as follows:
S1503: The terminal device sends the first information to the network device on the first resource, and correspondingly, the network device receives the first information from the terminal device on the first resource.

Based on 1503, the terminal device may directly send the first information on the first resource, and the network device does not need to additionally indicate other information, which can reduce transmission overheads.

S1504: The network device sends the fourth indication information to the terminal device, and correspondingly, the terminal device receives the fourth indication information from the network device.

The fourth indication information indicates a fourth resource.

The fourth resource is a resource that does not overlap a third resource.

For example, the fourth resource may be one or more PUSCH resources, but the one or more PUSCH resources do not overlap the third resource.

S1505: The terminal device sends the first information to the network device on the fourth resource, and correspondingly, the network device receives the first information from the terminal device on the fourth resource.

Based on S1504 and S1505, the terminal device may send the first information on the fourth resource, to ensure, as much as possible, that the network device is not interfered with by other information (the other information is information transmitted on the third resource) when receiving the first information on the fourth resource, thereby improving communication reliability and improving communication performance.

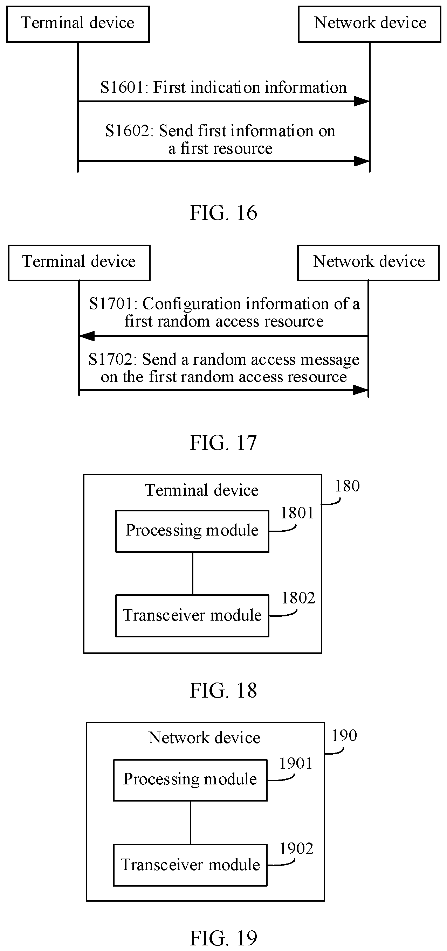

In a third possible design, when a network device does not parse first indication information, specific steps of communication between the network device and a terminal device may be shown in FIG. 16.

S1601: The terminal device sends the first indication information to the network device, and correspondingly, the network device receives the first indication information from the terminal device.

It may be understood that, the first indication information may indicate that the terminal device supports avoiding a second resource when sending first information on a first resource, or the first indication information may indicate that the terminal device does not support avoiding a second resource when sending first information on a first resource.

S1602: The terminal device sends the first information to the network device on the first resource, and correspondingly, the network device receives the first information from the terminal device on the first resource.

It may be understood that, when the network device does not support parsing the first indication information, the network device considers, by default, that the terminal device does not support avoiding the second resource when sending the first information on the first resource, and does not send third indication information or fourth indication information to the terminal device. In addition, the network device receives the first information on the first resource. Correspondingly, when the terminal device does not receive the third indication information or the fourth indication information in a preset time period (or the terminal device does not receive the third indication information or the fourth indication information in a specific message (for example, Msg4 or MsgB)), the terminal device may send the first information to the network device on the first resource. In this way, the terminal device is aligned with the network device.

The preset time period may be predefined, or the preset time period may be configured by the network device, or the preset time period may be defined in a protocol.

For example, a moment at which the terminal device sends the first indication information is a moment 1. If a time interval is T, the preset time period may be moment 1+T. In other words, when the terminal device does not receive the third indication information or the fourth indication information at a moment 1+T, the terminal device may send the first information to the network device on the first resource.

Based on the foregoing three possible designs, when the terminal device determines that the network device parses the first indication information (for example, the network device sends the second indication information, or it is considered, by default, that the network device may parse the first indication information), the terminal device may determine, without an indication of the network device, the resource for sending the first information (for example, when the first indication information indicates that the terminal device supports avoiding the second resource when sending the first information on the first resource, the terminal device may determine, based on the third indication information, the resource for sending the first information, or may directly send the first information on the resource in the first resource other than the second resource).

Alternatively, when the terminal device does not determine whether the network device can parse the first indication information (for example, the network device does not send the second indication information), the terminal device needs to determine the resource of the first information under an indication of the network device (for example, when the first indication information indicates that the terminal device supports avoiding the second resource when sending the first information on the first resource, the terminal device needs to determine, based on the third indication information, the resource for sending the first information, and if the terminal device does not receive the third indication information, the terminal device sends the first information on the first resource).

Optionally, different from a case in which a terminal device explicitly indicates, based on first indication information, a capability of the terminal device to avoid a second resource when sending first information on a first resource, this application further proposes a communication method. The terminal device may initiate random access based on a first random access resource, to implicitly indicate, to a network device, that the terminal device supports avoiding the second resource when sending the first information on the first resource. Specific steps may be shown in FIG. 17.

S1701: The terminal device receives configuration information of the first random access resource from the network device.

The first random access resource may be a specific random access resource.

Optionally, the first random access resource may include one or more of the following: a specific random access preamble or a specific RO.

In a first possible embodiment, that the first random access resource includes the specific random access preamble is used as an example. The terminal device may send Msg1 to the network device on an RO, and Msg1 may include the specific random access preamble.

In a second possible embodiment, that the first random access resource includes the specific RO is used as an example. The terminal device may send Msg1 to the network device on the specific RO. Msg1 is consistent with Msg1 in S101.

In a third possible embodiment, that the first random access resource includes the specific random access preamble and the specific RO is used as an example. The terminal device may send Msg1 to the network device on the specific RO. Msg1 may include the specific random access preamble.

It may be understood that the terminal device may indicate, based on the first random access resource, the capability of the terminal device to avoid the second resource when sending the first information on the first resource.

The second resource being a resource, in the first resource, that overlaps a third resource.

S1702: When the terminal device supports avoiding the second resource when sending the first information on the first resource, the terminal device sends a random access message to the network device on the first random access resource, and correspondingly, the network device receives the random access message from the terminal device on the first random access resource.

The random access message may be Msg1, or may be MsgA. This is not limited.

In a possible implementation, after the terminal device initiates random access on the first random access resource, the terminal device may directly send the first information to the network device on a resource in the first resource other than the second resource without an indication of the network device.

In another possible implementation, after the terminal device initiates random access on the first random access resource, the network device may send third indication information to the terminal device. Further, the terminal device may determine, based on the third indication information, a resource for sending the first information.

In an example, when the third indication information indicates that the terminal device is to avoid the second resource when sending the first information on the first resource, the terminal device may send the first information to the network device on the resource in the first resource other than the second resource, and correspondingly, the network device may receive the first information from the terminal device on the resource in the first resource other than the second resource. Alternatively, when the third indication information indicates that the terminal device is not to avoid the second resource when sending the first information on the first resource, the terminal device may send the first information to the network device on the first resource, and correspondingly, the network device may receive the first information from the terminal device on the first resource.

In another example, when the network device sends the third indication information to the terminal device, the terminal device may send the first information to the network device on the resource in the first resource other than the second resource, and correspondingly, the network device may receive the first information from the terminal device on the resource in the first resource other than the second resource. Alternatively, when the network device does not send the third indication information to the terminal device, the terminal device may send the first information to the network device on the first resource, and correspondingly, the network device may receive the first information from the terminal device on the first resource.

It may be understood that, for the third indication information, refer to the descriptions of the third indication information in FIG. 14. Details are not described herein again.

Based on the foregoing two possible implementations, for details, refer to related descriptions in FIG. 14. Details are not described herein again.

Optionally, when the network device receives, on the first random access resource, the random access message from the terminal device, the network device may further determine that the terminal device requests uplink transmission enhancement; or the terminal device may send first request information to the network device, to request uplink transmission enhancement based on the first request information.

For the first request information, refer to the foregoing descriptions of the first request information. Details are not described herein again.

It may be understood that, when the terminal device does not support avoiding the second resource when sending the first information on the first resource, the terminal device may send the random access message to the network device on the second random access resource, and correspondingly, the network device may receive the random access message from the terminal device on the second random access resource.

The second random access resource may be a shared random access resource (for example, a random access resource used in a contention-based random access process), or the second random access resource may be a dedicated/independent random access resource (for example, a random access resource used in a contention-free random access process).

In a possible implementation, after the terminal device initiates random access on the second random access resource, the terminal device may directly send the first information to the network device on the first resource without an indication of the network device.

In another possible implementation, after the terminal device initiates random access on the second random access resource, the network device may send fourth indication information to the terminal device. The fourth indication information indicates a fourth resource. Further, the terminal device may determine, based on the fourth indication information, that the resource for sending the first information is the fourth resource, and send the first information to the network device on the fourth resource.

For the fourth indication information, refer to the descriptions of the fourth indication information in S1504. Details are not described herein again.

Based on the foregoing two possible implementations, for details, refer to related descriptions in FIG. 15. Details are not described herein again.

Based on the communication method shown in FIG. 17, in comparison with a case in which the terminal device explicitly indicates, based on the first indication information, the capability of the terminal device to avoid the second resource when sending the first information on the first resource, the terminal device may implicitly indicate, based on the first random access resource, that the terminal device can avoid the second resource when sending the first information on the first resource. Further, the terminal device can avoid the second resource when sending the first information, to ensure that the network device is not interfered with by other information (the other information is information transmitted on the third resource) when receiving the first information, thereby improving communication reliability and improving communication performance.

It should be noted that various embodiments of this application may be implemented independently, or may be implemented in combination. This is not limited. Unless otherwise specified or there is a logic conflict, terms and/or descriptions in different embodiments provided by this application are consistent and may be mutually referenced, and technical features in different embodiments may be combined into a new embodiment based on an internal logical relationship thereof.

It may be understood that, in embodiments of this application, an execution body may perform a part or all of steps in embodiments of this application. These steps or operations are merely examples, and other operations or variants of various operations may be further performed in embodiments of this application. In addition, the steps may be performed in a sequence different from that presented in embodiments of this application, and not all of the operations in embodiments of this application may be necessarily performed.

The foregoing mainly describes the solutions provided in this application from the perspective of interaction between devices. Correspondingly, this application further provides a communication apparatus, and the communication apparatus is configured to implement the foregoing methods. The communication apparatus may be the network device in the foregoing method embodiments, an apparatus including the foregoing network device, or a component that can be used in the network device. Alternatively, the communication apparatus may be the terminal device in the foregoing method embodiments, an apparatus including the foregoing terminal device, or a component that can be used in the terminal device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in an actual implementation.

In an implementation scenario, an example in which the communication apparatus is the terminal device in the foregoing method embodiments is used. FIG. 18 is a diagram of a structure of a terminal device 180. The terminal device 180 includes a processing module 1801 and a transceiver module 1802.

In some embodiments, the terminal device 180 may further include a storage module (not shown in FIG. 18), configured to store program instructions and data.

In some embodiments, the transceiver module 1802 may also be referred to as a transceiver unit, and is configured to implement a sending function and/or a receiving function. The transceiver module 1802 may include a transceiver circuit, a transceiver machine, a transceiver, or a communication interface.

In some embodiments, the transceiver module 1802 may include a receiving module and a sending module, respectively configured to perform receiving and sending steps performed by the terminal device in the foregoing method embodiments, and/or configured to support another process of the technology described in this specification. The processing module 1801 may be configured to perform processing (for example, determining and generation) steps performed by the terminal device in the foregoing method embodiments, and/or configured to support another process of the technology described in this specification.

For example, the transceiver module 1802 is configured to send first indication information. The first indication information indicates a capability of the terminal device to avoid a second resource when sending first information on a first resource, and the second resource being a resource, in the first resource, that overlaps a third resource. The transceiver module 1802 is further configured to send the first information.

In a possible implementation, the transceiver module 1802 is further configured to receive second indication information. The second indication information indicates that the terminal device is allowed to send the first indication information.

In a possible implementation, the transceiver module 1802 is further configured to send the first information only on a resource in the first resource other than the second resource.

In a possible implementation, the transceiver module 1802 is further configured to receive third indication information, and the transceiver module 1802 is further configured to send the first information only on a resource in the first resource other than the second resource, where the third indication information indicates that the terminal device is to avoid the second resource when sending the first information on the first resource; or the transceiver module 1802 is further configured to receive third indication information, and the transceiver module 1802 is further configured to send the first information on the first resource, where the third indication information indicates that the terminal device is not to avoid the second resource when sending the first information on the first resource.

In a possible implementation, the transceiver module 1802 is further configured to receive fourth indication information, where the fourth indication information indicates a fourth resource, and the fourth resource is a resource that does not overlap the third resource; and the transceiver module 1802 is further configured to send the first information on the fourth resource.

In a possible implementation, the first indication information is carried in a first message, and the first message is one or more of the following: a random access message 3 and a random access message B.

In a possible implementation, the first indication information is carried in a subheader of a media access control protocol data unit in the first message.

In a possible implementation, the first indication information is indicated by one or more of the following fields in the subheader of the media access control protocol data unit: an LCID field and a first field.

In a possible implementation, the first indication information is indicated by a value of the LCID field in logical channel identifier space, and the logical channel identifier space is indicated by the first field; or the first indication information is indicated by an extended LCID field, and the extended LCID field includes the LCID field and the first field.

In a possible implementation, the first indication information further indicates a size of common control channel CCCH information; or fifth indication information is carried in the first message, the fifth indication information indicates a size of CCCH information, and the first message is one or more of the following: the random access message 3 and the random access message B.

In a possible implementation, the first indication information is further used to request uplink transmission enhancement; or first request information is carried in the first message, the first request information is used to request uplink transmission enhancement, and the first message is one or more of the following: the random access message 3 and the random access message B.

In a possible implementation, the third resource is a random access resource.

For another example, the transceiver module 1802 is configured to receive configuration information of a first random access resource; and the processing module 1801 is configured to indicate, by using the first random access resource, a capability of the terminal device to avoid a second resource when sending first information on a first resource. The second resource being a resource, in the first resource, that overlaps a third resource.

In a possible implementation, the transceiver module 1802 is further configured to initiate random access on the first random access resource when the terminal device supports avoiding the second resource when sending the first information on the first resource.

In a possible implementation, the transceiver module 1802 is further configured to send the first information only on a resource in the first resource other than the second resource; or the transceiver module 1802 is further configured to receive third indication information, and the transceiver module 1802 is further configured to send the first information on a resource in the first resource other than the second resource, where the third indication information indicates that the terminal device is to avoid the second resource when sending the first information on the first resource; or the transceiver module 1802 is further configured to receive third indication information, and the transceiver module 1802 is further configured to send the first information on the first resource, where the third indication information indicates that the terminal device is not to avoid the second resource when sending the first information on the first resource.

In a possible implementation, the first random access resource further indicates the terminal device to request uplink transmission enhancement; or the transceiver module 1802 is further configured to send first request information, where the first request information is used to request uplink transmission enhancement.

In a possible implementation, the first random access resource includes one or more of the following: a specific random access preamble or a specific random access channel occasion.

In a possible implementation, the third resource is a random access resource.

In this application, the terminal device 180 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in hardware implementation, a person skilled in the art may figure out that the terminal device 180 may be in a form of the communication apparatus 100 shown in FIG. 10.

In an example, the functions/implementation processes of the processing module 1801 in FIG. 18 may be implemented by the processor 1001 in the communication apparatus 100 shown in FIG. 10 by invoking computer-executable instructions stored in the memory 1003. The functions/implementation processes of the transceiver module 1802 in FIG. 18 may be implemented by the communication interface 1004 in the communication apparatus 100 shown in FIG. 10.

In some embodiments, when the terminal device 180 in FIG. 18 is a chip or a chip system, the functions/implementation processes of the transceiver module 1802 may be implemented through an input/output interface (or a communication interface) of the chip or the chip system, and the functions/implementation processes of the processing module 1801 may be implemented by using a processor (or a processing circuit) of the chip or the chip system.

The terminal device 180 provided in this embodiment may perform the foregoing method. Therefore, for technical effects that can be achieved by the terminal device, refer to the method embodiments. Details are not described herein again.

In another implementation scenario, an example in which the communication apparatus is the network device in the foregoing method embodiments is used. FIG. 19 is a diagram of a structure of a network device 190. The network device 190 includes a processing module 1901 and a transceiver module 1902.

In some embodiments, the network device 190 may further include a storage module (not shown in FIG. 19), configured to store program instructions and data.

In some embodiments, the transceiver module 1902 may also be referred to as a transceiver unit, configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module, respectively configured to perform receiving and sending steps performed by the network device in the method embodiments, and/or configured to support another process of the technology described in this specification. The processing module 1901 may be configured to perform processing (for example, determining and generation) steps performed by the network device in the method embodiments, and/or configured to support another process of the technology described in this specification.

For example, the transceiver module 1902 is configured to receive first indication information. The first indication information indicates a capability of a terminal device to avoid a second resource when sending first information on a first resource, and the second resource being a resource, in the first resource, that overlaps a third resource. The transceiver module 1902 is further configured to receive the first information.

In a possible implementation, the transceiver module 1902 is further configured to send second indication information. The second indication indicates that the terminal device is allowed to send the first indication information.

In a possible implementation, the transceiver module 1902 is further configured to receive the first information only on a resource in the first resource other than the second resource.

In a possible implementation, the transceiver module 1902 is further configured to send third indication information, and the transceiver module 1902 is further configured to receive the first information only on a resource in the first resource other than the second resource, where the third indication information indicates that the terminal device is to avoid the second resource when sending the first information on the first resource; or the transceiver module 1902 is further configured to send third indication information, and the transceiver module 1902 is further configured to receive the first information on the first resource, where the third indication information indicates that the terminal device is not to avoid the second resource when sending the first information on the first resource.

In a possible implementation, the transceiver module 1902 is further configured to send fourth indication information, where the fourth indication information indicates a fourth resource, and the fourth resource is a resource that does not overlap the third resource; and the transceiver module 1902 is further configured to receive the first information on the fourth resource.

In a possible implementation, the transceiver module 1902 is further configured to receive the first information only on a resource in the first resource other than the second resource.

In a possible implementation, the first indication information is carried in a first message, and the first message is one or more of the following: a random access message 3 and a random access message B.

In a possible implementation, the first indication information is carried in a subheader of a media access control protocol data unit in the first message.

In a possible implementation, the first indication information is indicated by one or more of the following fields in the subheader of the media access control protocol data unit: an LCID field and a first field.

In a possible implementation, the first indication information is indicated by a value of the LCID field in logical channel identifier space, and the logical channel identifier space is indicated by the first field; or the first indication information is indicated by an extended LCID field, and the extended LCID field includes the LCID field and the first field.

In a possible implementation, the first indication information further indicates a size of common control channel CCCH information; or fifth indication information is carried in the first message, the fifth indication information indicates a size of CCCH information, and the first message is one or more of the following: the random access message 3 and the random access message B.

In a possible implementation, the first indication information is further used to request uplink transmission enhancement; or first request information is carried in the first message, the first request information is used to request uplink transmission enhancement, and the first message is one or more of the following: the random access message 3 and the random access message B.

In a possible implementation, the third resource is a random access resource.

For another example, the transceiver module 1902 is configured to send configuration information of a first random access resource; and the processing module 1901 is configured to determine, by using the first random access resource, a capability of a terminal device to avoid a second resource when sending first information on a first resource. The second resource being a resource, in the first resource, that overlaps a third resource.

In a possible implementation, the transceiver module 1902 is further configured to receive a random access message on the first random access resource.

In a possible implementation, the transceiver module 1902 is further configured to receive the first information from the terminal device only on a resource in the first resource other than the second resource; or the transceiver module 1902 is further configured to send third indication information to the terminal device, and the transceiver module 1902 is further configured to receive the first information from the terminal device only on a resource in the first resource other than the second resource, where the third indication information indicates the terminal device to send the first information on a resource in the first resource other than the second resource; or the transceiver module 1902 is further configured to send third indication information to the terminal device, and the transceiver module 1902 is further configured to receive the first information from the terminal device on the first resource, where the third indication information indicates the terminal device to send the first information on the first resource.

In a possible implementation, the first random access resource includes one or more of the following: a specific random access preamble or a specific random access channel occasion.

In a possible implementation, the third resource is a random access resource.

In this application, the network device 190 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in hardware implementation, a person skilled in the art may figure out that the network device 190 may be in a form of the communication apparatus 100 shown in FIG. 10.

In an example, the functions/implementation processes of the processing module 1901 in FIG. 19 may be implemented by the processor 1001 in the communication apparatus 100 shown in FIG. 10 by invoking computer-executable instructions stored in the memory 1003. The functions/implementation processes of the transceiver module 1902 in FIG. 19 may be implemented by the communication interface 1004 in the communication apparatus 100 shown in FIG. 10.

In some embodiments, when the network device 190 in FIG. 19 is a chip or a chip system, the functions/implementation processes of the transceiver module 1902 may be implemented through an input/output interface (or a communication interface) of the chip or the chip system, and the functions/implementation processes of the processing module 1901 may be implemented by using a processor (or a processing circuit) of the chip or the chip system.

The network device 190 provided in this embodiment may perform the foregoing method. Therefore, for technical effects that can be achieved by the network device, refer to the method embodiments. Details are not described herein again.

In a possible product form, the network device or the terminal device in embodiments of this application may alternatively be implemented by the following: one or more field programmable gate arrays (field programmable gate arrays, FPGAs), a programmable logic device (programmable logic device, PLD), a controller, a state machine, a gate logic, a discrete hardware component, any other proper circuit, or any combination of circuits that can perform various functions described throughout this application.

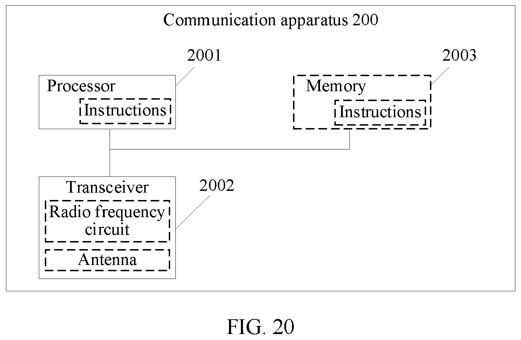

In another possible product form, the network device and the terminal device in embodiments of this application may be implemented by using a general bus architecture. For ease of description, FIG. 20 is a diagram of a structure of a communication apparatus 200 according to an embodiment of this application. The communication apparatus 200 includes a processor 2001 and a transceiver 2002. The communication apparatus 200 may be a network device, or a chip or a module in the network device. Alternatively, the communication apparatus 200 may be a terminal device, or a chip or a module in the terminal device. FIG. 20 shows only main components of the communication apparatus 200. In addition to the processor 2001 and the transceiver 2002, the communication apparatus may further include a memory 2003.

Optionally, the processor 2001 is mainly configured to: process a communication protocol and communication data, and control the entire communication apparatus to execute a software program and process data of the software program. The memory 2003 is mainly configured to store the software program and the data. The transceiver 2002 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave.

Optionally, the processor 2001, the transceiver 2002, and the memory 2003 may be connected through a communication bus.

After the communication apparatus is powered on, the processor 2001 may read a software program in the memory 2003, explain and execute instructions of the software program, and process data of the software program. When data needs to be sent in a wireless manner, after performing baseband processing on to-be-sent data, the processor 2001 outputs a baseband signal to the radio frequency circuit. After performing radio frequency processing on the baseband signal, the radio frequency circuit sends a radio frequency signal through an antenna in a form of an electromagnetic wave. When data is sent to the communication apparatus, the radio frequency circuit receives the radio frequency signal through the antenna, converts the radio frequency signal into a baseband signal, and outputs the baseband signal to the processor 2001. The processor 2001 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, an embodiment of this application further provides a communication apparatus. The communication apparatus includes a processor, configured to implement the method in any one of the foregoing method embodiments. The communication apparatus may be the network device or the terminal device in the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the memory may alternatively not be in the communication apparatus.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed operating process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:
sending first indication information, wherein the first indication information indicates a capability of a terminal device to avoid a second resource when sending first information on a first resource, and the second resource being a resource, in the first resource, that overlaps a third resource; and
sending the first information.

2. The method according to claim 1, wherein the method further comprises:
receiving second indication information, wherein the second indication information indicates that the terminal device is allowed to send the first indication information.

3. The method according to claim 2, wherein when the first indication information indicates that the terminal device supports avoiding the second resource when sending the first information on the first resource, the sending the first information comprises:
sending the first information only on a resource in the first resource other than the second resource.

4. The method according to claim 1 or 2, wherein when the first indication information indicates that the terminal device supports avoiding the second resource when sending the first information on the first resource, the sending the first information comprises:
receiving third indication information, and sending the first information only on a resource in the first resource other than the second resource, wherein the third indication information indicates that the terminal device is to avoid the second resource when sending the first information on the first resource; or
receiving third indication information, and sending the first information on the first resource, wherein the third indication information indicates that the terminal device is not to avoid the second resource when sending the first information on the first resource.

5. The method according to claim 1 or 2, wherein when the first indication information indicates that the terminal device does not support avoiding the second resource when sending the first information on the first resource, the sending the first information comprises:
receiving fourth indication information, wherein the fourth indication information indicates a fourth resource, and the fourth resource is a resource that does not overlap the third resource; and
sending the first information on the fourth resource.

6. The method according to claim 1, wherein when the first indication information indicates that the terminal device supports avoiding the second resource when sending the first information on the first resource, the sending the first information comprises:
sending the first information on the first resource when the terminal device does not receive third indication information; or
sending the first information only on a resource in the first resource other than the second resource, wherein
the third indication information indicates, to the terminal device, whether to avoid the second resource when sending the first information on the first resource.

7. A communication method, comprising:
receiving first indication information, wherein the first indication information indicates a capability of a terminal device to avoid a second resource when sending first information on a first resource, and the second resource being a resource, in the first resource, that overlaps a third resource; and
receiving the first information.

8. The method according to claim 7, wherein the method further comprises:
sending second indication information, wherein the second indication indicates that the terminal device is allowed to send the first indication information.

9. The method according to claim 8, wherein when the first indication information indicates that the terminal device supports avoiding the second resource when sending the first information on the first resource, the receiving the first information comprises:
receiving the first information only on a resource in the first resource other than the second resource.

10. The method according to claim 7 or 8, wherein when the first indication information indicates that the terminal device supports avoiding the second resource when sending the first information on the first resource, the receiving the first information comprises:
sending third indication information, and receiving the first information only on a resource in the first resource other than the second resource, wherein the third indication information indicates that the terminal device is to avoid the second resource when sending the first information on the first resource; or
sending third indication information, and receiving the first information on the first resource, wherein the third indication information indicates that the terminal device is not to avoid the second resource when sending the first information on the first resource.

11. The method according to claim 7 or 8, wherein when the first indication information indicates that the terminal device does not support avoiding the second resource when sending the first information on the first resource, the receiving the first information comprises:
sending fourth indication information, wherein the fourth indication information indicates a fourth resource, and the fourth resource is a resource that does not overlap the third resource; and
receiving the first information on the fourth resource.

12. The method according to claim 7, wherein when the first indication information indicates that the terminal device supports avoiding the second resource when sending the first information on the first resource, the receiving the first information comprises:
receiving the first information only on a resource in the first resource other than the second resource.

13. The method according to any one of claims 1 to 12, wherein
the first indication information is carried in a first message, and the first message is one or more of the following: a random access message 3 or a random access message B.

14. The method according to claim 13, wherein
the first indication information is carried in a subheader of a media access control protocol data unit in the first message.

15. The method according to claim 14, wherein
the first indication information is indicated by one or more of the following fields in the subheader of the media access control protocol data unit: a logical channel identifier field or a first field.

16. The method according to claim 15, wherein the first indication information is indicated by the logical channel identifier field and the first field, specifically as follows:
the first indication information is indicated by a value of the logical channel identifier field in logical channel identifier space, and the logical channel identifier space is indicated by the first field; or
the first indication information is indicated by an extended logical channel identifier field, and the extended logical channel identifier field comprises the logical channel identifier field and the first field.

17. The method according to any one of claims 1 to 16, wherein
the first indication information further indicates a size of common control channel CCCH information; or
fifth indication information is carried in the first message, the fifth indication information indicates a size of the CCCH information, and the first message is one or more of the following: the random access message 3 and the random access message B.

18. The method according to any one of claims 1 to 17, wherein
the first indication information is further used to request uplink transmission enhancement; or
first request information is carried in the first message, the first request information is used to request uplink transmission enhancement, and the first message is one or more of the following: the random access message 3 and the random access message B.

19. A communication method, comprising:
receiving configuration information of a first random access resource; and
indicating, by using the first random access resource, a capability of a terminal device to avoid a second resource when sending first information on a first resource, wherein the second resource being a resource, in the first resource, that overlaps a third resource.

20. The method according to claim 19, wherein the method further comprises:
initiating random access on the first random access resource when the terminal device supports avoiding the second resource when sending the first information on the first resource.

21. The method according to claim 19 or 20, wherein the method further comprises:
sending the first information only on a resource in the first resource other than the second resource; or
receiving third indication information, and sending the first information on a resource in the first resource other than the second resource, wherein the third indication information indicates that the terminal device is to avoid the second resource when sending the first information on the first resource; or
receiving third indication information, and sending the first information on the first resource, wherein the third indication information indicates that the terminal device is not to avoid the second resource when sending the first information on the first resource.

22. The method according to any one of claims 19 to 21, wherein
the first random access resource further indicates the terminal device to request uplink transmission enhancement; or
sending first request information, wherein the first request information is used to request uplink transmission enhancement.

23. A communication method, comprising:
sending configuration information of a first random access resource; and
determining, by using the first random access resource, a capability of a terminal device to avoid a second resource when sending first information on a first resource, wherein the second resource being a resource, in the first resource, that overlaps a third resource.

24. The method according to claim 23, wherein the method further comprises:
receiving a random access message on the first random access resource.

25. The method according to claim 23 or 24, wherein the method further comprises:
receiving the first information from the terminal device only on a resource in the first resource other than the second resource; or
sending third indication information to the terminal device, and receiving the first information from the terminal device only on a resource in the first resource other than the second resource, wherein the third indication information indicates the terminal device to send the first information on the resource in the first resource other than the second resource; or
sending third indication information to the terminal device, and receiving the first information from the terminal device on the first resource, wherein the third indication information indicates the terminal device to send the first information on the first resource.

26. The method according to any one of claims 19 to 25, wherein
the first random access resource comprises one or more of the following: a specific random access preamble or a specific random access channel occasion.

27. The method according to any one of claims 1 to 26, wherein
the third resource is a random access resource.

28. A communication apparatus, comprising:
a unit or module configured to implement the communication method according to any one of claims 1 to 6, 13 to 18, and 27, a unit or module configured to implement the communication method according to any one of claims 7 to 18 and 27, a unit or module configured to implement the communication method according to any one of claims 19 to 22 and 26 to 27, or a unit or module configured to implement the communication method according to any one of claims 23 to 27.

29. A computer-readable storage medium, wherein the computer-readable storage medium stores computer instructions or a program, and when the computer instructions or the program is run on a computer, the communication method according to any one of claims 1 to 6, 13 to 18, or 27 is performed, or the communication apparatus is caused to perform the communication method according to any one of claims 7 to 18 or 27, or the communication apparatus is caused to perform the communication method according to any one of claims 19 to 22 or 26 to 27, or the communication apparatus is caused to perform the communication method according to any one of claims 23 to 27.

30. A computer program product, wherein the computer program product comprises computer instructions, and when a part or all of the computer instructions are run, the communication method according to any one of claims 1 to 6, 13 to 18, and 27 is performed, or the communication method according to any one of claims 7 to 18 and 27 is performed, or the communication method according to any one of claims 19 to 22 and 26 to 27 is performed, or the communication method according to any one of claims 23 to 27 is performed.
